# EUROPÄISCHE PATENTSCHRIFT

(11) **EP 3 160 236 B1**
(45) Veröffentlichungstag und Bekanntmachung des Hinweises auf die Patenterteilung: **16.10.2019**
(21) Anmeldenummer: 15732220.7
(22) Anmeldetag: 25.06.2015
(51) Int. Cl.: A21D 2/26, A21D 2/36, A21D 8/00, A21D 10/00, A21D 13/06, A21D 13/02, A21D 13/04, A21D 13/062, A21D 13/40, A23L 25/00, A23L 33/19, A23L 33/22, A23L 33/00, A21D 13/064

(54) **ZUSAMMENSETZUNG FÜR GLUTEN- UND KOHLENHYDRATARME BACK- UND TEIGWAREN**
COMPOSITION FOR LOW-GLUTEN AND LOW-CARBOHYDRATE BAKED AND PASTRY GOODS
COMPOSITION DESTINÉE À DES PRODUITS DE BOULANGERIE ET DES PÂTES ALIMENTAIRES PAUVRES EN GLUTEN ET EN GLUCIDES

(30) Priorität: 26.06.2014 DE 102014009654
(43) Veröffentlichungstag der Anmeldung: 03.05.2017
(73) Patentinhaber: Charrak, Samir, 67240 Bobenheim-Roxheim (DE); Charrak, Monika, 67240 Bobenheim-Roxheim (DE)
(72) Erfinder: Charrak, Samir, 67240 Bobenheim-Roxheim (DE); Charrak, Monika, 67240 Bobenheim-Roxheim (DE)
(74) Vertreter: Reitstötter Kinzebach
(86) Internationale Anmeldenummer: PCT/EP2015/064364
(87) Internationale Veröffentlichungsnummer: WO 2015/197760

(56) Entgegenhaltungen:
- WO-A1-2007/137578
- US-A1- 2014 161 963
- Anonymous ET AL: "Seed Crispbread Baking Mix with Chia Seeds", GNPD, 1. Mai 2014 (2014-05-01), Seiten 1-2, XP055204607, Gefunden im Internet: URL:http://www.gnpd.com/sinatra/recordpage /2395193/from_search/NUR3RpFfvT/ [gefunden am 2015-07-24]

## Beschreibung

Die vorliegende Erfindung betrifft eine Zusammensetzung für die Herstellung gluten- und kohlenhydratarmer Back- und Teigwaren, enthaltend die folgenden Inhaltsstoffe:
a) Mehl, gewonnen aus einer oder mehreren Schalenfrüchten und/oder Ölsaaten von nicht-Leguminosen,
b) Schleimpolysaccharide enthaltendes Pflanzenerzeugnis oder aus diesem Pflanzenerzeugnis isolierte Schleimpolysaccharide,
c) Proteinkomponente, die in der Trockenmasse zu mindestens 40 % aus tierischem Protein besteht.

Eine solche Zusammensetzung enthält maximal 0,1 % Gluten und ist bevorzugt glutenfrei, d.h. sie hat einen Glutengehalt unterhalb von 20 mg/kg (< 20 ppm Glutengehalt). Aufgrund des geringen Gluten- und Kohlenhydratgehalts der Komponenten a), b) und c) eignet sich die erfindungsgemäße Zusammensetzung zur Herstellung von glutenarmen, insbesondere vorzugsweise glutenfreien Back- und Teigwaren, mit geringem Kohlenhydrat-Gehalt von in der Regel < 15 %, bezogen auf das verzehrfertige Nahrungsmittel, und insbesondere zur Herstellung von glutenarmen, insbesondere vorzugsweise glutenfreien Back- und Teigwaren, die folgendes Nährstoffprofil, bezogen auf das verzehrfertige Nahrungsmittel, aufweisen: weniger als 10 % Kohlenhydrate, mehr als 10 % Eiweiß, 1 - 40 % Fett.

Eine kohlenhydratarme Ernährung ist ein Gesundheitstrend, der sich weltweit immer mehr durchsetzt. Waren es damals hauptsächlich Diabetiker, die auf den Kohlenhydratgehalt ihrer Nahrungsmittel achten mussten, so erkennen heutzutage immer mehr Menschen die gesundheitlichen Vorteile einer kohlenhydratarmen Ernährung.

Kohlenhydrate sind kein essentieller Bestandteil der Nahrung, da der Körper dazu in der Lage ist, die für die Gehirnfunktion notwendigen Kohlenhydrate durch Gluconeogenese aus Proteinen und Glycerin selber herzustellen. Dahingegen sind viele Bestandteile von Proteinen (Aminosäuren) sowie von Fetten (Fettsäuren) essentiell und müssen über die Nahrung zugeführt werden, um wichtige Körperfunktionen zu ermöglichen und aufrecht zu erhalten. In der heutigen Zeit, in der in der westlichen Welt immer weniger schwere körperliche Arbeiten ausgeführt werden, ist unser Energiebedarf deutlich gesunken. Trotz alledem werden bestimmte Mengen an essentiellen Fettsäuren und Aminosäuren nach wie vor benötigt. Um dem reduzierten Energiebedarf zu entsprechen, ist also eine Reduktion der Kohlenhydrate das Mittel der Wahl.

Der Verzehr von Kohlenhydraten, insbesondere von Glukose und Stärke, führt zu einer Erhöhung des Blutzuckerspiegels, welches die vermehrte Freisetzung von Insulin zur Folge hat. Insulin bewirkt, dass der Blutzucker (Glukose) als Glykogen gespeichert wird und verhindert gleichzeitig die Freisetzung von bereits gespeicherter Energie. Ein hoher Insulinspiegel hat zur Folge, dass der Blutzuckerspiegel (teilweise rapide) sinkt, was ein erneutes Hungergefühl bewirkt. Eine kohlenhydratreiche Ernährung führt letztendlich dazu, dass das Hormonsystem dauerhaft auf Energiespeicherung eingestellt ist, wodurch sich bei einem Überschuss an zugeführten Kalorien die Energiespeicher (Fettgewebe) ständig weiter vergrößern. Der Versuch, das überschüssige Fettgewebe durch kalorienreduzierte Diäten zu vermindern, scheitert häufig daran, dass es aufgrund von Blutzuckerschwankungen zu vermehrten Heißhungerattacken kommt. Häufig schwankende Blutzuckerspiegel, wie sie durch eine kohlenhydratreiche Ernährung verursacht werden, werden außerdem mit dem Auftreten von Insulinresistenz und einer Entwicklung von Diabetes-Typ 2 Erkrankungen in Verbindung gebracht.

Wenn dem Körper weniger Kohlenhydrate, insbesondere weniger Zucker und Stärke, zugeführt werden, können diese Blutzuckerschwankungen infolge von hohen Insulin-Ausschüttungen gering gehalten werden. Dabei wird die Energieversorgung des Körpers durch Körperfett (Ketose) stimuliert und eine Reduktion von überschüssigen Fettreserven erleichtert. Bei der kohlenhydratarmen Ernährungsform werden außerdem höhere Mengen Eiweiß und Fett konsumiert, was sich zudem positiv auf das Sättigungsgefühl auswirkt. Außerdem wird hierdurch sichergestellt, dass der Körper optimal mit essentiellen Aminosäuren und Fettsäuren versorgt wird.

Bei der Umstellung auf eine kohlenhydratarme Ernährung gilt es zahlreiche Gewohnheiten aufzugeben, die mit der herkömmlichen, kohlenhydratreichen Ernährung erlernt wurden. Als besonders schwer empfunden wird in der Regel der Verzicht auf Back- und Teigwaren, insbesondere auf Brot.

Unter dem Begriff "herkömmliche Nahrungsmittel" bzw. "herkömmliche Back- und Teigwaren" werden kohlenhydratreiche Nahrungsmittel bzw. Back- und Teigwaren verstanden, welche auf Basis von den Mehlen der üblichen Getreidesorten wie Weizen, Roggen, Hafer, Gerste usw. hergestellt werden und in der Regel einen Kohlenhydratgehalt von > 40 % aufweisen.

Der sich stetig weiter verbreitende Gesundheitstrend der kohlenhydratarmen Ernährung hat die Entwicklung zahlreicher neuer Produkte vorangetrieben, die dem Diätwilligen die Umstellung erleichtern sollen. Eines dieser Produkte ist das sogenannte "Eiweiß-Brot", auch bekannt als "Low-carb Brot" welches einen stark reduzierten Kohlenhydratgehalt aufweist. Um ein für die kohlenhydratarme Ernährung geeignetes Nährstoffprofil zu erzielen, werden diese Brote in der Regel mit großen Mengen Gluten hergestellt, meist in Kombination mit Sojamehl, Ölsaaten und kleineren Mengen Weizenvollkornmehl.

Nahrungsmittel werden in der Regel als kohlenhydratarm bezeichnet, wenn sie einen Kohlenhydratanteil von < 15%, bevorzugt von < 10 % bezogen, auf das verzehrfertige Nahrungsmittel aufweisen. wobei unter dem Kohlenhydratanteil der Anteil an verwertbaren Kohlenhydraten zu verstehen ist, d. h. Kohlenhydrate, die vom menschlichen Körper im Dünndarm in Zucker umgewandelt werden können. Im Dünndarm nicht-verwertbare Kohlenhydrate wie Ballaststoffe werden nicht dem Kohlenhydratanteil zugerechnet.

US 2014/0161963 beschreibt ein Kohlenhydrat-armes bzw. -freies Allzweck-Backmehl mit hohem Protein- und Ballaststoffgehalt und geringem Fett- und Kaloriengehalt. In einer bevorzugten Ausführungsform werden die Proteine und Fasern in Gegenwart eines Bindemittels miteinander vermischt. Es wird behauptet, dass das Mehl glutenfrei hergestellt werden kann.

WO 2007/137578 beschreibt eine Trockenmischung zur Herstellung von glutenfreiem Teig für Brot, umfassend gemahlenes Mehl, vorzugsweise natürlich glutenfreies Mehl, unter Verwendung einer trockenen Mischung ausgewählter pulverförmiger Materialien, umfassend schaumbildendes Material und Hefe und ein gelbildendes Pflanzenmaterial.

Das kommerziell erhältliche Produkt "Seed Crispbread Baking Mix with Chia Seeds" des Herstellers bzw. der Marke "Risenta" benennt auf der Produktverpackung die Zusammensetzung des Produkts, wobei Sonnenblumensamen, Sesamsamen, Kürbissamen, Leinsamen, Psylliumkernschalen und Chiasamen als Hauptbestandteile genannt sind.

In DE 202011107231U1 wird beispielsweise eine Zusammensetzung beschrieben, die 15-30 % Gluten enthält und als weitere Hauptbestandteile Ölsaaten und Sojaerzeugnisse.

In WO2012/076911A2 wird eine kohlenhydratarme Mehlmischung beschrieben, die hauptsächlich aus verschiedenen ballaststoffreichen Pflanzenbestandteilen und bis zu 45 % Gluten bestehen. Derartige Zusammensetzungen werden in den letzten Jahren vermehrt in Online-Shops, Feinkostgeschäften und mittlerweile sogar von Lebensmitteldiscountern angeboten. Viele der Zusammensetzungen dieser Art enthalten weniger als 10 % Kohlenhydrate im verzehrfertigen Produkt. Allerdings enthalten viele solcher Produkte aufgrund der eingesetzten hohen Mengen an Ölsamen auch einen verhältnismäßig hohen Fettanteil. Der Nährstoff Fett wird zwar im Allgemeinen in der kohlenhydratarmen Ernährungsform nicht als problematisch angesehen, jedoch kann ein hoher Fettanteil zu einer erhöhten Energiedichte gegenüber herkömmlichen Nahrungsmitteln führen. Dies ist insbesondere dann problematisch, wenn die kohlenhydratarme Ernährungsweise zur Gewichtsreduktion genutzt werden soll und mit einer kalorienreduzierten Diät einhergeht.

Vor allem sehr problematisch kann jedoch der hohe Glutenanteil der neuen, eiweißreichen Nahrungsmittel sein, der teilweise deutlich höher ist als in den herkömmlichen Nahrungsmitteln.

Gluten hat einen entscheidenden Einfluss auf die rheologischen Eigenschaften eines Teiges. Durch Wasseraufnahme bildet Gluten eine elastische Masse und macht den Teig dehnbar. Es ermöglicht somit eine Volumenvergrößerung durch die während des Backvorgangs freiwerdenden Gase (Gashaltevermögen) und stabilisiert die größer werdenden Gaszellen, was für ein luftiges, leichtes Gebäck mit stabiler Krume sorgt.

Es gibt jedoch eine wachsende Anzahl an Krankheitsbildern, die durch eine gesundheitsschädigende Wirkung von Gluten auf den menschlichen Organismus hervorgerufen werden. Dabei unterscheidet man generell zwischen einer chronischen Darmentzündung in Form einer Autoimmunerkrankung (Zöliakie) und einer Glutensensitivität, die wiederum verschiedene Ausprägungen haben kann.

Bei Vorliegen einer Zöliakie führt der Verzehr von glutenhaltiger Nahrung zu einer schweren Immunreaktion mit Symptomen wie Gewichtsverlust, Durchfall, Erbrechen, Appetitlosigkeit, Müdigkeit und Depression. Es wird angenommen dass ca. 1 % der Bevölkerung in der westlichen Welt unter Zöliakie leiden.

Andere Erkrankungen, bei denen Gluten negative Auswirkungen auf den Körper hat, werden unter dem Begriff Glutensensitivität zusammengefasst. Zu den zahlreichen bisher beobachteten Symptomen gehören unter anderem Blähungen, abdominale Beschwerden, Durchfall, Kopfschmerzen, Migräne, Lethargie und Müdigkeit, Aufmerksamkeitsdefizitstörung und Hyperaktivität, Schizophrenie, Muskelbeschwerden sowie Knochen- und Gelenksschmerzen. Neuere Forschungen zeigen, dass der Gluten-Bestandteil Gliadin die Permeabilität der Dünndarmzellen erhöht und den Darm somit durchlässig für Nahrungsproteine macht. Des Weiteren wird angenommen, dass die Ausbildung einer Glutensensitivität durch häufigen Verzehr von glutenreichen Nahrungsmitteln begünstigt wird.

Es gibt also einen stetig wachsenden Anteil der Bevölkerung, der sich aus gesundheitlichen Gründen glutenfrei ernähren muss oder will. Für diesen Zweck wurden zahlreiche glutenfreie Produkte entwickelt. Laut EG Verordnung 41/2009 dürfen Lebensmittel als "glutenfrei" deklariert werden, die einen Glutengehalt von höchstens 20 mg/kg (20 ppm) aufweisen.

Lebensmittel, die durch produktionsbedingte Kontamination einen höheren Glutengehalt aufweisen, denen jedoch keinerlei glutenhaltigen Getreide oder Gluten als Zusatzstoff absichtlich zugefügt wurde, werden im Rahmen dieser Anmeldung als glutenarme Lebensmittel oder Lebensmittel mit geringem Glutengehalt bezeichnet. Die im Rahmen dieser Anmeldung als glutenarm beschriebenen Zusammensetzungen weisen einen Glutengehalt von maximal 0,1 % auf. Die im Rahmen dieser Anmeldung als glutenfrei beschriebenen Zusammensetzungen weisen einen Glutengehalt von maximal 20 ppm aus. Dieser Grenzwert steht mit der EG Verordnung 41/2009 in Einklang.

Anstelle von Weizenmehl werden die Mehle von glutenfreien Pflanzen verwendet, wie etwa Maismehl, Kartoffelmehl, Buchweizenmehl, Teffmehl oder vergleichbare Mehle. Nahrungsmittel aus diesen kohlenhydratreichen Mehlen sind jedoch nicht für eine kohlenhydratarme Ernährungsform geeignet. Darüber hinaus ist die Brotherstellung mit diesen hoch stärkehaltigen Mehlen in der Regel schwierig, da die funktionellen Eigenschaften des Glutens fehlen. Wenn im Laufe des Backvorgangs das durch Backtriebmittel wie Hefe oder Backpulver freigesetzte Kohlendioxid das Teigvolumen vergrößert, sorgt das elastische Gluten dafür, dass der Teig eine ausreichende Gashaltefähigkeit besitzt. Da den glutenfreien Mehlen jedoch diese Bindefähigkeit zur Ausbildung einer brotartigen Krume fehlt, müssen z.B. chemisch modifizierte Cellulosen zugesetzt werden, die die Wirkung von Gluten im Teig imitieren.

Aus EP 1561380 A1 ist beispielsweise eine Zusammensetzung bekannt, bei der glutenfreie Mehle mit großen Mengen Methylcellulose versetzt werden, um die Wasserquellfähigkeit des Teiges zu erhöhen. Der Nachteil der Verwendung von Methylcellulose in höheren Dosen ist jedoch deren abführende Wirkung. Des Weiteren ist die Akzeptanz von synthetisch hergestellten Nahrungsmitteln vor allem bei den betroffenen Verbrauchern sehr niedrig.

Als natürlicher Ersatz für die funktionellen Eigenschaften des Glutens in glutenfreien Produkten können schleimbildende Ballaststoffe wie Flohsamenerzeugnisse (auch bekannt als Ispaghula, Isabgol, Psyllium, blonder Flohsamen, schwarzer Flohsamen, indischer Flohsamen, französischer Flohsamen, aus der Pflanzengattung Plantago (Wegeriche)) verwendet werden. Die gesundheitsförderliche Wirkung von Flohsamenerzeugnissen aufgrund ihres hohen Ballaststoffgehalts und der Art der enthaltenen Ballaststoffe ist schon lange bekannt. Allerdings bestehen in der Mehrzahl der Veröffentlichungen die glutenfreien Teige weiterhin aus vorwiegend stärkereichen Mehlen. Die Kombination von Flohsamenerzeugnissen mit stärkereichen Mehlen scheint jedoch zu einigen Problemen in der Verarbeitung zu führen, wie einer gummiartigen Textur der Backwaren, einer geringen Stabilitäten während des Backvorgangs sowie kompakten, klumpigen oder zu klebrigen Teigen und Backwaren.

So wird beispielsweise auch in US 5955123 von Schwierigkeiten durch den stark hydrophilen Charakter der Flohsamenerzeugnisse berichtet. Als Lösung wird die Verwendung von einem speziellen, fein vermahlenen und anschließend durch Zusatz spezieller Bindemittel agglomerierten Flohsamenerzeugnis (Metamucil RTM) vorgeschlagen, allerdings auch in Kombination mit stärkehaltigen Mehlen.

Ein anderer Lösungsvorschlag wird in US 5095008 offenbart, laut dem eine spezielle Reihenfolge beim Mischen der ebenfalls stärkereichen Mehle, der übrigen Backzutaten und der Flohsamenschalenerzeugnisse einzuhalten ist.

In US 5126150 werden gemahlene Flohsamenschalen zunächst mit Calciumlactat oder einer Gelatineart beschichtet und erst danach mit den restlichen Teigbestandteilen gemischt, während US5384136 erklärt, die standardmäßige Zugabe von Flohsamenerzeugnissen zur Herstellung von Brot sei nicht möglich und erfordere deren Extrusion zu Pellets mit anschließendem Einweichen.

In US 2010/0303997 wird auf die Zugabe größerer Mengen stärkereicher Mehle zur Herstellung ballastststoffreicher und niedrig-glykämischer Backwaren, insbesondere Kekse, verzichtet. Allerdings erfordert die beschriebene Technik eine spezielle, kontrollierte Hydrierung der Schleimstoffe und die beschriebenen Backwaren bestehen zu großen Teilen aus Füllstoffen wie dem Zuckeralkohol Erythritol und weiteren Ballaststoffen wie Inulin, von dem bekannt ist, dass es in größeren Mengen digestive Probleme auslösen kann.

In WO 2011/039308A2 wird eine Zusammensetzung beschrieben, die als sowohl glutenfrei als auch kohlenhydratarm bezeichnet wird, allerdings werden in den beschriebenen Zusammensetzungen ebenfalls größere Mengen von stärkereichen Mehlen wie Buchweizenmehl, Reismehl, Maismehl, Teffmehl oder ähnliches verwendet.

Im Stand der Technik sind ferner Zusammensetzungen bekannt (Glutenfreies LowCarb-Weißbrot, Hersteller: Erdschwalbe Bioprodukte, Neu-Ulm), bei denen ein glutenfreies und kohlenhydratarmes Brot durch Verwendung großer Mengen Sojaerzeugnisse und Haferballaststoffe erreicht wird. Ein solches Produkt weist jedoch aufgrund der verwendeten Sojaerzeugnisse einen starken Beigeschmack auf und zeigt darüber hinaus eine kompakte, brotuntypische Porenstruktur der Krume auf. Darüber hinaus ist bei der Verwendung von großen Mengen Sojaerzeugnissen zu berücksichtigen, dass Sojabohnen sogenannte antinutritive Substanzen wie z.B. Phytate enthalten, die beim Verarbeitungsprozess nicht entfernt werden können. Phytate bewirken unter anderem, dass Mineralstoffe aus der Nahrung schlechter aufgenommen werden können, da sie diese irreversibel komplexieren.

Wünschenswert wäre daher eine Zusammensetzung für Back- und Teigwaren, die sowohl kohlenhydratarm, d.h. mit einem Anteil verwertbare Kohlehydrate von < 15 %, bevorzugt < 10% im verzehrfertigen Produkt, als auch glutenarm, d.h. mit einem Glutengehalt < 0,1% Gluten und bevorzugt glutenfrei sind, die vorwiegend aus natürlichen Zutaten bestehen und die darüber hinaus keine anderen, gesundheitsschädlichen Nebenwirkungen haben. Diese Back- und Teigwaren sollten die organoleptischen Eigenschaften (wie Geschmack, Konsistenz, Geruch, Farbe etc.) herkömmlicher Back- und Teigwaren aufweisen oder diesen sehr nahe kommen.

Für Brote und brotähnliche Backwaren beispielsweise bedeutet das insbesondere eine stabile, aber flexible Krume mit einer gleichmäßigen Porenstruktur, einer geringen Teigdichte und einen brotähnlichen, angenehmen Geschmack. Die besondere Herausforderung besteht darin, diese Eigenschaften trotz der fehlenden flexibilisierenden Wirkung des Glutens sowie der fehlenden Stabilisierung durch die Stärkeverkleisterung während des Backvorgangs zu erreichen.

Aufgabe der vorliegenden Erfindung ist es daher, eine neue Zusammensetzung bereitzustellen, die es erlaubt, Back- und Teigwaren herzustellen, die kohlenhydratarm und gleichzeitig glutenarm, insbesondere glutenfrei sind, insbesondere Back- und Teigwaren mit einem Gehalt verwertbarer Kohlenhydrate von <15 %, insbesondere < 10% Kohlenhydrate und die die Nachteile des Standes der Technik überwindet und es insbesondere erlaubt, Back- und Teigwaren herzustellen, die in ihren organoleptischen Eigenschaften den entsprechenden herkömmlichen, also glutenreichen und kohlenhydratreichen Nahrungsmitteln nahekommen. Des Weiteren sollte die Zusammensetzung geeignet sein, von dem Verbraucher in einfacher Weise zu Hause zu Back- oder Teigwaren weiterverarbeitet zu werden.

Erfindungsgemäß werden diese und weitere Aufgaben durch Zusammensetzungen gelöst, welche die folgenden Komponenten enthalten:
a) Mehl gewonnen aus einer oder mehreren Schalenfrüchten und/oder Ölsaaten von nicht-Leguminosen, in einer Menge von 20 bis 80 Gew.-%, bezogen auf Trockenmasse der Komponenten a), b) und c), wobei das Mehl wenigstens ein teilentöltes Mehl mit einem Fettgehalt unter 30 Gew.-% in einer Menge von wenigstens 20 Gew.-%, insbesondere wenigstens 50 Gew.-%, speziell wenigstens 80 Gew.-%, bezogen auf das Gesamtgewicht des als Komponente a) eingesetzten Mehls, enthält und wobei die Komponente a) maximal 75 Gew.-%, bezogen auf das Gesamtgewicht der Komponenten a), Kokosmehl enthält (Komponente a),
b) wenigstens ein Schleimpolysaccharide enthaltendes Pflanzenerzeugnis oder wenigstens ein aus diesem Pflanzenerzeugnis isoliertes Schleimpolysaccharid in einer Menge von 5 bis 40 Gew.-%, bezogen auf Trockenmasse der Komponenten a), b) und c) (Komponente b),
c) Proteinkomponente, in einer Menge von 4 bis 40 Gew.-%, bezogen auf Trockenmasse der Komponenten a), b) und c), wobei die Komponente c) ausgewählt ist unter Eiern, Eiklar und Eierzeugnissen, wobei die Eierzeugnisse ausgewählt sind unter Volleipulver und Eiklarpulver (Komponente c),
wobei die Zusammensetzung maximal 0,1% Gluten enthält,
wobei der Anteil der Gesamtmenge der Komponenten a), b) und c) an der Zusammensetzung, jeweils gerechnet als Trockenmasse der Komponenten a), b) und c), an der Gesamttrockenmasse der Zusammensetzung, wenigstens 60 Gew.-% beträgt,
wobei die Zusammensetzung weniger als 15 Gew.-% an verwertbaren Kohlenhydraten enthält, und
wobei die Zusammensetzung weniger als 15 Gew.-% Sojaerzeugnisse, bezogen auf die Gesamtmenge der Trockenbestandteile der Zusammensetzung, enthält.

In den erfindungsgemäßen Zusammensetzungen liegt der Anteil der Komponente a) im Bereich von 20 bis 80 Gew.-%, insbesondere 30 bis 75 Gew.-% und speziell 40 bis 70 Gew.-% oder 50 bis 70 Gew.-%, bezogen auf die Trockenmasse der Komponenten a), b) und c). In bestimmten Ausführungsformen kann der Anteil der Komponente a) auch 20 bis 50 Gew.-% betragen, beispielsweise wenn die Zusammensetzung zur Herstellung von Nudelteig geeignet sein soll.

In den erfindungsgemäßen Zusammensetzungen liegt der Anteil der Komponente b) im Bereich von 5 bis 40 Gew.-%, insbesondere 7 bis 35 Gew.-%, speziell 10 bis 25 oder 10 bis 20 Gew.-%, bezogen auf die Trockenmasse der Komponenten a), b) und c). In bestimmten Ausführungsformen kann der Anteil der Komponente b) auch 20 bis 40 Gew.-% betragen, beispielsweise wenn die Zusammensetzung zur Herstellung von Nudelteig geeignet sein soll.

In den erfindungsgemäßen Zusammensetzungen liegt der Anteil der Komponente c) im Bereich von 4 bis 40 Gew.-%, insbesondere 5 bis 35 Gew.-%, speziell 10 bis 30 Gew.-% oder 10 bis 20 Gew.-%, bezogen auf das Gesamtgewicht der Komponenten a), b) und c). In bestimmten Ausführungsformen kann der Anteil der Komponente c) auch 20 bis 40 Gew.-% betragen, beispielsweise wenn die Zusammensetzung zur Herstellung von Nudelteig geeignet sein soll.

Die Anteil der Gesamtmenge der Komponenten a), b) und c) an der erfindungsgemäßen Zusammensetzung, jeweils gerechnet als Trockenmasse der Komponenten a), b) und c), an der Gesamttrockenmasse der erfindungsgemäßen Zusammensetzung, beträgt wenigstens 60 Gew.-% und liegt insbesondere im Bereich von 60 bis 95 Gew.-%. Die Gesamtmenge an sonstigen Bestandteilen, beispielsweise Komponente d), wie weiter unten erläutert, sonstigen Ballaststoffen, pflanzlichen Proteinisolaten und Backhilfsmitteln, wird in der Regel 40 Gew.-% nicht überschreiten und liegt typischerweise im Bereich von 5 bis 40 Gew.-%, bezogen auf die Gesamttrockenmasse der erfindungsgemäßen Zusammensetzung.

Die Zusammensetzung umfassend die Komponenten a), b) und c) ist bevorzugt glutenfrei, d.h. ihr Gehalt an Gluten liegt unterhalb 20 mg/kg (< 20 ppm Gluten), bezogen auf die Trockenmasse der Zusammensetzung.

Die erfindungsgemäßen Zusammensetzungen enthalten weniger als 15 Gew.-% Sojaerzeugnisse bezogen auf die Gesamtmenge der Trockenbestandteile der erfindungsgemäßen Zusammensetzung.

Die erfindungsgemäßen Zusammensetzungen enthalten vorzugsweise weniger als 1 Gew.-% Methylcellulose.

Die erfindungsgemäßen Zusammensetzungen enthalten vorzugsweise weniger als 5 Gew.-% Zuckeralkohole wie Erythritol, Xylit, Sorbit, Mannit, Lactit oder Isomalt.

Die erfindungsgemäßen Zusammensetzungen enthalten vorzugsweise weniger als 5 Gew.-% Inulin.

Die erfindungsgemäßen Zusammensetzungen enthalten weniger als 15 Gew.-%, insbesondere weniger als 10 Gew.-% verwertbare Kohlenhydrate.

Bei den im Rahmen dieser Anmeldung aufgeführten Gehaltsangaben in Form von Prozenten (%) handelt es sich, sofern nichts anderes angegeben ist, ausschließlich um Massenanteile, auch als Gew.-% bezeichnet. Für einen Kohlenhydratgehalt von 15 % bezogen auf das verzehrfertige Nahrungsmittel bedeutet dies beispielsweise, dass 100 g des verzehrfertigen Nahrungsmittels 15 g verwertbare Kohlenhydrate enthalten.

Mit der erfindungsgemäßen Zusammensetzung lassen sich Back- und Teigwaren herstellen, die glutenarm sind, d.h. weniger als < 0,1 % Gluten, bezogen auf die Back- und Teigware, enthalten, und die insbesondere glutenfrei sind, d.h. < 20 ppm Gluten, bezogen auf die Back- und Teigware enthalten. Mit den erfindungsgemäßen Zusammensetzungen lassen sich zudem Back- und Teigwaren herstellen, die neben dem geringen Glutengehalt bzw. neben der Glutenfreiheit, kohlenhydratarm sind, d.h. weniger als 15 % und insbesondere weniger als 10 % verwertbare Kohlenhydrate enthalten, und die insbesondere folgendes Nährstoffprofil aufweisen: < 15 % Kohlenhydrate, bevorzugt < 10% Kohlenhydrate, > 10 % Eiweiß, 1 - 40 % Fett.

In einer besonderen Ausführungsform wird die erfindungsgemäße Zusammensetzung als Backvormischung bereitgestellt. Unter einer Backvormischung versteht man ein Gemisch der Komponenten a), b) und c) in fester Form und gegebenenfalls weiterer fester Komponenten, die mit einer verzehrbaren Flüssigkeit, insbesondere Wasser oder Milch oder einem Fruchtsaft, zu einem Teig verarbeitet wird, welcher anschließend zu einer Back- oder Teigware weiterverarbeitet wird. Dies ermöglicht es dem Verbraucher, die entsprechenden Back- und Teigwaren auf einfache Art und Weise in der heimischen Küche schnell und unkompliziert herzustellen.

In einer weiteren Ausführungsform wird die erfindungsgemäße Zusammensetzung als Gemisch der Komponenten a) und b) in fester Form und gegebenenfalls weiterer fester Komponenten bereitgestellt, die mit der Komponente c) und einer verzehrbaren Flüssigkeit, insbesondere Wasser oder Milch oder einem Fruchtsaft, zu einem Teig verarbeitet wird, welcher anschließend zu einer Back- oder Teigware weiterverarbeitet wird. Dies ermöglicht es dem Verbraucher, die entsprechenden Back- und Teigwaren auf einfache Art und Weise in der heimischen Küche schnell und unkompliziert herzustellen.

Mit der erfindungsgemäßen Zusammensetzung lassen sich kohlenhydratarme und glutenarme, bevorzugt glutenfreie Nahrungsmittel, insbesondere Back- und Teigwaren, bereitstellen, die aus Inhaltsstoffen natürlichen Ursprungs bestehen, keine gesundheitlichen Nachteile mit sich bringen und deren organoleptischen Eigenschaften mit denen von herkömmlichen Back-und Teigwaren vergleichbar sind. Von derartigen Nahrungsmitteln können gleich mehrere Personengruppen profitieren: zum einen solche, die sich aus gesundheitlichen oder anderen Gründen kohlenhydratarm ernähren müssen oder möchten, aber gleichzeitig keine Erhöhung ihres Glutenkonsums wünschen, und zum anderen solche, die unter einer Glutenunverträglichkeit leiden, sich aber trotzdem kohlenhydratarm ernähren müssen oder wollen.

Um Back- und Teigwaren mit den beschriebenen Eigenschaften zu erhalten, wurden Zusammensetzungen entwickelt, bei denen diese Eigenschaften durch gezielte Kombination von drei erforderlichen Komponenten erreicht werden. Die Komponenten werden im folgenden Abschnitt beschrieben.

Die Komponente a) der erfindungsgemäßen Zusammensetzung, im Folgenden auch als Hauptkomponente bezeichnet, macht bevorzugt mehr als 40 %, besonders bevorzugt mehr als 50 % der trockenen Zutaten der drei erforderlichen Komponenten a), b) und c) dieser Zusammensetzung aus. Die Hauptkomponente besteht aus Mehl, welches aus einer oder mehreren Schalenfrüchten und/oder aus einer oder mehreren nicht-leguminosen Ölsaaten gewonnen wird. Wenigstens ein Teil dieses Mehls, insbesondere wenigstens 50 %, speziell wenigstens 80 % oder die Gesamtmenge des Mehls, ist unter teilentölten Mehlen mit einem Fettgehalt unter 30 %, insbesondere unter 20 % oder unter 10 % ausgewählt.

Die Hauptkomponente wird so ausgewählt, dass die aus der erfindungsgemäßen Zusammensetzung hergestellten Back- und Teigwaren einen Kohlenhydratanteil von 15 %, bevorzugt von 10 %, nicht überschreitet.

Als Schalenfrüchte, welche landläufig auch als "Nüsse" und "Kerne" bezeichnet werden, werden die Samenspeichergewebe von Nutzpflanzen verstanden, die unter den Oberbegriff Samenobst fallen. Samenobst umfasst das Spektrum von Samen der nacktsamigen Nadelbäume bis hin zu Samen der bedecktsamigen Pflanzen mit verholztem und ungenießbarem Perikarp, die als Früchte geerntet werden (Lieberei, R., Reisdorff, C., Franke, W., Nutzpflanzenkunde, 7. Auflage 2007, Georg Thieme Verlag KG Stuttgart). Geeignete Schalenfrüchte im Sinne der Erfindung sind beispielsweise Steinfrüchte wie Mandeln, Kokosnüsse, Aprikosenkerne, Mangokerne, Granatapfelkerne, Pfirsichkerne, Pekannüsse und Pistazien, aber auch Nussfrüchte wie Walnüsse, Kastanien, Haselnüsse, Bucheckern, Eicheln, Hanfnüsse, Macadamianüsse, Steinnüsse und Wassernüsse, sowie ebenso morphologisch zu den Nüssen gehörende Mesokarpnüsse wie Erdnüsse. Ebenfalls als Schalenfrüchte bezeichnet werden Cashewnüsse, Pinienkerne und Paranüsse.

Als nicht leguminose Ölsaaten versteht man Ölsaaten von Pflanzen, die nicht zur Familie der Leguminosen (Hülsenfrüchtler) zählen. Erfindungsgemäß sind vor allem Mehle der folgenden Ölsaaten und deren Mischungen geeignet: Leinsamen, Goldleinsamen, Sonnenblumensamen, Kürbissamen, Sesam, Chia-Samen, Traubenkerne und Mohnsamen.

In einer besonderen Ausführungsform der Erfindung handelt es sich bei den aus Schalenfrüchten gewonnenen Mehlen um Mehle, die aus einer oder mehreren Schalenfrüchten gewonnen wurden, die ausgewählt sind aus der Gruppe bestehend aus Mandeln, Kokosnüssen, Aprikosenkernen, Mangokernen, Granatapfelkernen, Pfirsichkernen, Pekannüssen, Pistazien, Walnüssen, Kastanienn, Haselnüssen, Bucheckern, Eicheln, Hanfnüssen, Macadamianüssen, Steinnüssen, Wassernüssen, Erdnüssen, Cashewnüssen, Pinienkernen und Paranüssen.

In einer besonderen Ausführungsform der Erfindung handelt es sich bei der Komponente a) um Mehle, die aus einer oder mehreren nicht-Leguminosen Ölsaaten gewonnen wurden, die ausgewählt sind aus der Gruppe bestehend aus Leinsamen, Goldleinsamen, Sonnenblumenkernen, Kürbiskernen, Traubenkernen, Sesam, Chia-Samen und Mohnsamen, insbesondere Mehle von Ölsaaten aus der Gruppe Leinsamen, Goldleinsamen, Sonnenblumenkernen und Kürbiskernen.

Als Hauptkomponente kann auch eine Kombination von mehreren der beschriebenen Mehle eingesetzt werden. Es werden bevorzugt Mehle kohlenhydratarmer Schalenfrüchte und/oder Mehle kohlenhydratarmer Ölsaaten sowie Kombinationen daraus eingesetzt, wie z.B. Mehle von Schalenfrüchten, ausgewählt unter Mandeln, Walnüssen, Kokosnüssen, Pekannüssen, Macadamianüssen, Erdnüssen und Paranüssen oder Mehle von Ölsaaten, wie Leinsamen, Goldleinsamen, Sonnenblumenkernen, Kürbiskernen, Traubenkernen, Sesam, Chia-Samen und Mohnsamen, insbesondere von wie Leinsamen, Goldleinsamen, Sonnenblumenkernen und Kürbiskernen.

In bevorzugten Ausführungsformen der Erfindung besteht die Komponente a) aus einem Gemisch wenigstens von verschiedenen Mehlen, z.B. Mehlen verschiedener Schalenfrüchte und/oder Ölsaaten, oder einem Gemisch teilentölter Mehle mit nicht-entölten Mehlen, z.B. aus einem Gemisch aus teilentöltem Mandelmehl und teilentöltem Kokosmehl, aus einem Gemisch aus teilentöltem Mandelmehl und nicht entöltem Mandelmehl, aus einem Gemisch aus teilentöltem Mandelmehl, teilentöltem Kokosmehl und teilentöltem Haselnussmehl, aus einem Gemisch aus teilentöltem Mandelmehl, teilentöltem Kokosmehl und teilentöltem Leinmehl, aus einem Gemisch aus teilentöltem Mandelmehl und teilentöltem Leinmehl, aus einem Gemisch aus teilentöltem Mandelmehl, teilentöltem Leinmehl und teilentöltem Kürbiskernmehl, aus einem Gemisch aus teilentöltem Mandelmehl, teilentöltem Leinmehl und nicht entöltem Mandelmehl, aus einem Gemisch aus teilentöltem Mandelmehl, teilentöltem Leinmehl, teilentöltem Kürbiskernmehl und teilentöltem Traubenkernmehl, aus einem Gemisch aus teilentöltem Kokosmehl, teilentöltem Leinmehl, teilentöltem Sesammehl und teilentöltem Sonnenblumenmehl, aus einem Gemisch aus teilentöltem Kokosmehl, teilentöltem Leinmehl und teilentöltem Kürbiskernmehl, aus einem Gemisch aus teilentöltem Kokosmehl, teilentöltem Leinmehl und teilentöltem Haselnussmehl, aus einem Gemisch aus teilentöltem Kokosmehl, teilentöltem Leinmehl und teilentöltem Kürbiskernmehl, aus einem Gemisch aus teilentöltem Kokosmehl, teilentöltem Leinmehl, teilentöltem Haselnussmehl und teilentöltem Kürbiskernmehl, aus einem Gemisch aus teilentöltem Leinmehl und teilentöltem Kürbiskernmehl, oder aus einem Gemisch aus teilentöltem Leinmehl, teilentöltem Traubenkernmehl und teilentöltem Kürbiskernmehl.

In weiteren bevorzugten Ausführungsformen der Erfindung besteht die Komponente a) aus wenigstens einem Mehl einer Schalenfrucht, insbesondere aus einem Gemisch von Mehlen verschiedener Schalenfrüchte.

In weiteren bevorzugten Ausführungsformen der Erfindung besteht die Komponente a) aus einem Gemisch wenigstens eines Mehls einer Schalenfrucht und wenigstens eines Mehls aus einer nicht-leguminosen Ölsaat.

In weiteren bevorzugten Ausführungsformen der Erfindung besteht die Komponente a) aus wenigstens einem Mehl einer Ölsaat, insbesondere aus einem Gemisch von Mehlen verschiedener Ölsaaten.

Es ist dem Fachmann ersichtlich, dass auch die Mehle von kohlenhydratreicheren Schalenfrüchten in Kombination mit kohlenhydratärmeren Schalenfrüchten verwendet werden können, sofern sich dies vorteilhaft auf den gewünschten Geschmack oder die gewünschte Konsistenz auswirkt und trotzdem das angestrebte Nährstoffprofil erreicht werden kann.

Vorteilhaft zur Verwendung in größeren Mengen der Hauptkomponente sind teilentölte Mehle und/oder Kleien der entsprechenden Schalenfrüchte, da sie aufgrund ihres verringerten Fettgehaltes eine höhere Wasserbindefähigkeit besitzen und für eine verbesserte Konsistenz der Back- und Teigwaren sorgen.

In einer besonderen Ausführungsform der Erfindung ist die Komponente a) ein teilentöltes Mehl, welches ganz oder teilweise aus dem Presskuchen hergestellt wird, der bei der Ölgewinnung aus diesen Nahrungsmitteln anfällt. Teilentölte Mehle von Schalenfrüchten und/oder Ölsaaten erhält man z.B. durch Vermahlen des bei der Ölgewinnung erhaltenen Presskuchens.

Für die Herstellung von Broten und brotähnlichen Produkten besonders vorteilhaft ist die Verwendung von teilentöltem Mandelmehl, teilentöltem Kokosmehl, teilentöltem Walnussmehl, teilentöltem Erdnussmehl, teilentöltem Haselnussmehl und teilentöltem Macadamianussmehl und ebenso von teilentöltem Kürbiskernmehl, teilentöltem Sonnenblumenmehl, teilentöltem Sesammehl und teilentöltem Leinsamenmehl, einschließlich teilentöltem Goldleinsamenmehl, sowie allen denkbaren Kombination daraus, da mit diesen Mehlen eine besonders angenehmer Geschmack erzielt wird, der kaum von dem Geschmack eines konventionellen Brotes zu unterscheiden ist. Die Mehle können unterschiedlich stark teilentölt werden. Je nach Entölungsgrad wird der Fettgehalt von über 50 % auf bis zu unter 10 % reduziert. Die im Rahmen dieser Erfindung verwendeten teilentölten Mehle von Schalenfrüchten umschließen alle Entölungsgrade. Bevorzugt werden jedoch teilentölte Mehle mit einem Fettgehalt von < 30 % insbesondere < 20 % oder < 10 % verwendet.

In besonderen Ausführungsformen der Erfindung handelt es sich bei Komponente a) um ein oder mehrere Mehle ausgewählt aus der Gruppe bestehend aus teilentöltem Mandelmehl, teilentöltem Kokosmehl, teilentöltem Walnussmehl, teilentöltem Erdnussmehl, teilentöltem Haselnussmehl und teilentöltem Macadamianussmehl, Kürbiskernmehl, teilentöltem Sonnenblumenmehl und teilentöltem Leinsamenmehl, einschließlich teilentöltem Goldleinsamenmehl, oder um ein oder mehrere Mehle ausgewählt aus der Gruppe bestehend aus teilentöltem Mandelmehl, teilentöltem Kokosmehl, teilentöltem Walnussmehl, teilentöltem Erdnussmehl, teilentöltem Aprikosenkernmehl, teilentöltem Haselnussmehl und teilentöltem Macadamianussmehl.

Insbesondere für die Herstellung von Broten und brotähnlichen Produkten kann durch sorgfältige Auswahl der Kombination der Schalenfrüchte und Ölsaaten ein angenehmes Mundgefühl und ein Geschmack erzielt werden, welche der Textur und dem Geschmack eines konventionellen Brotes ähneln.

Für diesen Zweck nicht geeignet ist beispielsweise die Verwendung von ausschließlich nicht-entöltem Mehl aus Mandeln für die Hauptkomponente. Mandeln enthalten mehr als 50 % Fett. Die Verwendung von ausschließlich oder mehr als 80 % nicht-entöltem Mehl aus Mandeln in der Hauptkomponente resultiert in einer signifikant verringerten Wasserbindefähigkeit des Teiges, so dass das daraus erhaltene Produkt eine brotuntypische Konsistenz sowie einen intensiven Beigeschmack aufweist, welcher vermutlich durch den hohen Anteil an Pflanzenölen hervorgerufen wird. Darüber hinaus resultiert die Verwendung von ausschließlich nicht-entöltem Mandelmehl in einem hochkalorischen Nahrungsmittel mit einem sehr hohen Fettanteil. Das Gleiche gilt für die ausschließliche Verwendung von nicht-entölten Mehlen von anderen Schalenfrüchten oder Ölsaaten, sofern sie einen Fettanteil von > 50 % aufweisen. Dementsprechend enthält die Komponente a) wenigstens ein teilentöltes Mehl mit einem Fettgehalt unter 30 Gew.-% in einer Menge von wenigstens 20 Gew.-%, insbesondere wenigstens 50 Gew.-%, speziell wenigstens 80 Gew.-%, bezogen auf das Gesamtgewicht des als Komponente a) eingesetzten Mehls. Dementsprechend enthält die Hauptkomponente a) maximal 80%, insbesondere maximal 50 %, speziell maximal 20 % nicht-entöltes Mehl von Schalenfrüchten und/oder Ölsaaten mit einem Fettanteil von > 50 %.

In einer besonderen Ausführungsform der Erfindung enthält die Komponente a) mindestens 25 Gew.-%, bezogen auf die Komponente a), teilentöltes Mandelmehl.

Ebenfalls ungeeignet ist die Verwendung von ausschließlich Kokosmehl für die Hauptkomponente, da Kokosmehl im Vergleich zu anderen Mehlen aus Schalenfrüchten (unabhängig davon ob teilentölt oder nicht) eine außergewöhnlich hohe Wasserbindefähigkeit besitzt. Daraus erhaltene Produkte weisen ebenfalls einen intensiven Beigeschmack und eine brotuntypische Konsistenz auf, die sich in einem unnatürlich trockenen Mundgefühl beim Verzehr äußert. Dementsprechend enthält die Komponente a), bezogen auf das Gesamtgewicht der Komponenten a), maximal 75%, insbesondere maximal 50% Kokosmehl.

Die Komponente b) der erfindungsgemäßen Zusammensetzung, im Folgenden auch als gelbildende Komponente bezeichnet, besteht aus einem oder mehreren Schleimpolysaccharide enthaltenden Pflanzenerzeugnissen und/oder aus Schleimpolysacchariden, welche aus diesen Pflanzenerzeugnissen isoliert wurden. Die Schleimpolysaccharide der gelbildenden Komponente nehmen große Mengen Flüssigkeit auf und bilden ein Gel, welches in Teigen, die aus der erfindungsgemäßen Zusammensetzung hergestellt werden, die funktionellen Eigenschaften des Glutens teilweise ersetzen. Das während der Verarbeitung und im Laufe des Backvorganges aus dem Backtriebmittel freigesetzte Kohlendioxid sorgt für eine Vergrößerung des Teigvolumens. Hierfür muss der Teig jedoch eine gewisse Elastizität aufweisen, wie es bei konventionellen, glutenhaltigen Teigen der Fall ist, der Fachmann spricht hier von "Gashaltefähigkeit" des Teiges. Eine ausreichende Gashaltefähigkeit des kohlenhydratarmen und glutenfreien Teiges lässt sich durch gezielten Einsatz einer geeigneten gelbildenden Komponente erreichen. Des Weiteren wird der Ballaststoffanteil der erfindungsgemäßen Zusammensetzung durch die gelbildende Komponente erhöht, ohne sich jedoch negativ auf den Geschmack der daraus hergestellten Back-und Teigwaren auszuwirken.

Geeignet als gelbildende Komponente sind bspw. Pflanzenerzeugnisse, ausgewählt aus der Gruppe bestehend aus Flohsamenerzeugnissen, beispielsweise Flohsamen, Flohsamenschalen, indische Flohsamen oder indische Flohsamenschalen, Samen der Chia-Pflanzen, beispielsweise Kalifornische Chia und Mexikanische Chia, sowie Erzeugnisse daraus, und Samen von Leingewächsen, z.B. Leinsamen oder Goldleinsamen, sowie Erzeugnisse daraus. Besonders gute Backergebnisse lassen sich durch die Verwendung von Flohsamen bzw. Flohsamenerzeugnissen erzielen, da diese teilweise sogar einen Schleimpolysaccharidgehalt von > 20 % aufweisen können.

Vorzugsweise kommt Komponente b) ohne spezielle Vorbehandlung zum Einsatz. Die erwünschten Eigenschaften der Teige lassen sich allein durch die spezielle, erfindungsgemäße Kombination der einzelnen Komponenten erreichen.

In besonderen Ausführungsformen der Erfindung beträgt der Anteil der Komponente b) an der erfindungsgemäßen Zusammensetzung 10 bis 35 %, bezogen auf die Trockenmasse der Komponenten a), b) und c).

In weiteren besonderen Ausführungsformen der Erfindung beträgt der Anteil der Komponente b) an der erfindungsgemäßen Zusammensetzung 5 bis 20 %, bezogen auf die Trockenmasse der Komponenten a), b) und c).

In weiteren besonderen Ausführungsformen der Erfindung beträgt der Anteil der Komponente b) an der erfindungsgemäßen Zusammensetzung 10 bis 40 %, speziell 20 bis 35 %, bezogen auf die Trockenmasse der Komponenten a), b) und c).

In einer besonderen Ausführungsform der Erfindung werden die Schleimstoffe enthaltenden Pflanzenerzeugnisse in Pulverform verwendet, deren Korngröße < 0,8 mm (> 20 mesh) beträgt.

In einer besonderen Ausführungsform der Erfindung handelt es sich bei der Komponente b) um (1) eine oder mehrere Pflanzenerzeugnisse ausgewählt aus der Gruppe bestehend aus Flohsamen, Flohsamenschalen, indische Flohsamen, indische Flohsamenschalen und/oder (2) eine oder mehrere aus diesen Pflanzenerzeugnissen isolierten Schleimpolysacchariden. Speziell handelt es sich bei der Komponente b) um Flohsamenschalen oder daraus gewonnen Erzeugnissen.

Die Komponente c) der erfindungsgemäßen Zusammensetzung, im Folgenden auch als Proteinkomponente bezeichnet ist ausgewählt ist unter Eiern, Eiklar und Eierzeugnissen, wobei die Eierzeugnisse ausgewählt sind unter Volleipulver und Eiklarpulver. Die Proteinkomponente hat mehrere Funktionen in den aus der erfindungsgemäßen Zusammensetzung hergestellten Teigen und Back- und Teigwaren. Die Proteinkomponente gibt dem Teig eine erhöhte Stabilität und Wasserbindefähigkeit und trägt darüber hinaus zu einem guten Geschmack der Back- und Teigwaren bei. Das im Laufe des Gar- bzw. Backvorganges denaturierende Protein ersetzt teilweise die funktionellen Eigenschaften der Stärke in kohlenhydratreichen Back- und Teigwaren, da sie beispielsweise bei Broten für ein stabiles Gerüst der Krume sorgt.

Erfindungsgemäße Proteinkomponente sind Eier, Eiklar und Eierzeugnisse wie Volleipulver und Eiklarpulver, da sie den fertigen Back- und Teigwaren einen besonders angenehmen Geschmack verleihen. Insbesondere die Kombination von Eiern, Eiklar oder Eierzeugnissen mit Flohsamenschalen oder daraus gewonnenen Erzeugnissen, und speziell die Kombination von Eiklar oder Eiklarpulver mit Flohsamenschalen oder daraus gewonnenen Erzeugnissen, hat sich für das Backergebnis als besonders vorteilhaft erwiesen.

In einer besonderen Ausführungsform der Erfindung beträgt der Anteil der Komponente c) an der erfindungsgemäßen Zusammensetzung mindestens 10% bezogen auf die Trockenmasse der Komponenten a), b) und c), z.B. 10 bis 40 %.

Bei der Verwendung der erfindungsgemäßen Zusammensetzung beispielsweise zur Herstellung von Broten lässt sich eine Krume erhalten, die mit der Krume eines glutenhaltigen und kohlenhydratreichen Brotes vergleichbar ist.

In einer besonderen Ausführungsform umfasst die erfindungsgemäße Zusammensetzung zusätzlich essbare Pflanzenbestandteile in ganzer oder zerkleinerter, von einem Mehl verschiedenen Form, z.B. in gehackter oder geschroteter Form. Derartige essbare Pflanzenbestandteile, im Folgenden auch als Komponente d) bezeichnet, sind beispielsweise Hülsenfrüchte, Schalenfrüchte, Ölsamen, glutenfreie Getreiden und glutenfreie Pseudogetreide.

In einer besonderen Ausführungsform enthält die erfindungsgemäße Zusammensetzung neben den Komponenten a), b) und c) als Komponente d) ein oder mehrere Schalenfrüchte und/oder Ölsaaten in ganzer, gehackter oder geschroteter Form. Diese optionale Komponente d) hat nur einen geringen Einfluss auf die backtechnischen Eigenschaften von den aus der erfindungsgemäßen Zusammensetzung hergestellten Teigen und dienen vornehmlich der Verfeinerung des Geschmacks und des Mundgefühls der Back- und Teigwaren. Besonders geeignet für diesen Zweck sind Leinsamen, Sonnenblumenkerne, Sesam, Mohn, Erdnüsse, Sojaerzeugnisse, diese jedoch vorzugsweise in geringer Mengen, bevorzugt < 15 %, bezogen auf die Gesamtmenge der Trockenbestandteile der erfindungsgemäßen Zusammensetzung, Buchweizen, glutenfreie Hafererzeugnisse, Walnüsse, Mandeln, Pekannüsse, Haselnüsse, Paranüsse, Macadamianüsse, Pistazien, Pinienkerne, Kürbiskerne, Traubenkerne, Hanfsamen, Granatapfelkerne, Chia-Samen, Kichererbsen und Cashewkerne.

Der Anteil der Komponente d), kann bis zu 40 Gew.-%, bezogen auf die Gesamttrockenmasse der erfindungsgemäßen Zusammensetzung ausmachen. Sofern enthalten, liegt der Anteil der Komponente d) insbesondere im Bereich von 2 bis 40 Gew.-%, bezogen auf die Gesamttrockenmasse der erfindungsgemäßen Zusammensetzungen.

In besonderen Ausführungsformen der Erfindung enthält die erfindungsgemäße Zusammensetzung wenigstens einen der als Komponente d) genannten Bestandteil, der ausgewählt ist aus der Gruppe bestehend aus Hülsenfrüchten, Ölsamen, Schalenfrüchten, glutenfreien Getreiden, glutenfreien Pseudogetreiden.

In besonderen Ausführungsformen der Erfindung sind die Pflanzenbestandteile ausgewählt aus der Gruppe bestehend aus Leinsamen, Goldleinsamen, Sonnenblumenkerne, Sesam, Chia-Samen, Mohnsamen, Erdnüsse, Buchweizen, glutenfreien Hafererzeugnissen, Walnüssen, Mandeln, Kokosnüsse, Pekannüssen, Haselnüssen, Macadamianüssen, Traubenkernen, Pistazien, Pinienkernen, Kürbiskernen, Haselnüssen, Paranüssen, und Cashewkernen.

Darüber hinaus kann die erfindungsgemäße Zusammensetzung weitere Zutaten enthalten, die standardmäßig in Back- und Teigwaren enthalten sind und dem Fachmann bestens bekannt sind.

Zur Verwendung als Backvormischung enthält die erfindungsgemäße Zusammensetzung in der Regel zusätzlich Salz und ein Backtriebmittel. Das Backtriebmittel besteht bevorzugt aus einer Mischung einer a) gasbildenden Komponente wie z.B. Natriumhydrogencarbonat, Kaliumhydrogencarbonat, Calciumcarbonat oder etwas vergleichbarem, b) einer Säurekomponente wie z.B. Weinstein, Weinsäure, Pyrophosphate, Glucono-delta-lacton, Zitronensäure oder etwas vergleichbarem und optional c) einem Trennmittel wie z.B. Maisstärke, Kartoffelstärke, Reisstärke oder einer anderen glutenfreien Stärkeart, oder Ballaststoffmehlen wie glutenfreie Haferfaser, Kokosfaser oder etwas vergleichbarem. Das Backtriebmittel kann ebenfalls Trockenbackhefe oder getrockneter glutenfreier Sauerteig sein oder enthalten.

In einer bevorzugten Ausführungsform enthalten die erfindungsgemäßen Zusammensetzungen zusätzlich eine oder mehrere Bestandteile aus den Gruppen der Backhilfsmittel, Süßungsmittel, Fette und ballaststoffhaltigen Zusätze. Beispiele für Backhilfsmittel sind Salz, die vorgenannten Backtriebmittel, Aromastoffe, Gewürze, Süßungsmittel, Trennmittel und Konservierungsmittel. Beispiele für, ballaststoffhaltige Zusätze sind Apfelfaser, Haferfaser, Erbsenfaser, Kartoffelfaser, Mandelfaser, Kokosfaser, Cellulosefaser, Hagebuttenkernfaser, Brombeerkernfaser, Granatapfelkernfaser und Inulinund/oder zusätzlich ein pflanzliches Proteinisolat, beispielsweise Reisprotein, Kartoffelprotein, Erbsenprotein, Chiasamenprotein und/oder Hanfprotein . Bei den Fetten kann es sich um pflanzliches Fett und tierisches Fett handeln. Der Anteil der weiteren Bestandteile liegt in den für Backrezepturen üblichen Mengen. Die Gesamtmenge wird 40 Gew.-%, bezogen auf die Trockenmasse der erfindungsgemäßen Zusammensetzung nicht überschreiten und liegt typischerweise im Bereich von 1 bis 40 Gew.-%.

Die erfindungsgemäße Zusammensetzung enthalten in der Regel maximal 10 %, bezogen auf die Trockenmasse der Zusammensetzung, Konservierungsmittel, Stabilisatoren und Säureregulatoren, wie z.B. Ascorbinsäure, Zitronensäure, Weinsäure, Milchsäure, Äpfelsäure, Guarkernmehl, Johannisbrotkernmehl, Pfeilwurzelstärke, Reisstärke, Maisstärke, Erbsenstärke, Agar-Agar, Lecithine, Pektine, Alginate, Xanthan, Tarakernmehl, Gelatine und Casein.

In besonderen Ausführungsformen enthalten die erfindungsgemäßen Zusammensetzungen zusätzlich wenigstens einen unter Aromastoffen, Gewürzen und Süßungsmitteln ausgewählten Bestandteil. Bei den Aromastoffen und Gewürzen handelt es sich z.B. um Zimt, Koriander, Fenchel, Anis, Kardamom, Vanille, Ingwer, Muskatnuss, Muskatblüte, Knoblauch, Pfeffer, Chilli-Gewürz, Basilikum, Oregano, Curry, Orangenschale, Zitronenschale, Sternanis, Kümmel oder Zwiebeln. Geeignete Süßungsmittel sind z.B. Zuckeraustauschstoffe wie Erythritol, Xylit, Sorbit, Mannit, Lactit, Isomalt sowie Süßstoffe wie Acesulfam, Aspartam, Cyclamat, Neohesperidin, Neotam, Saccharin, Sucralose, Steviosid, Thaumatin sowie etwas vergleichbarem. Besonders bevorzugte Süßungsmittel sind Erythritol und Steviosid, da beide natürlichen Ursprungs sind. Zuckeraustauschstoffe machen bevorzugt nicht mehr als 40 %, insbesondere nicht mehr als 20 % der Zusammensetzung aus.

In besonderen Ausführungsformen enthält die erfindungsgemäße Zusammensetzung, bezogen auf die Trockenmasse der Zusammensetzung, 20 bis 70 Gew.-% teilentöltes Mehl von Schalenfrüchten und/oder nicht-Leguminosen Ölsaaten, 5 bis 40 Gew.-%, insbesondere 10 bis 40 Gew.-% Flohsamenschalen und 4 bis 40 Gew.-%, insbesondere 10 bis 40 Gew.-% Eiklarpulver oder Volleipulver.

In besonderen Ausführungsformen enthält die erfindungsgemäße Zusammensetzung, bezogen auf die Trockenmasse, 30 bis 70 % teilentöltes Mehl von Schalenfrüchten und/oder nicht-leguminosen Ölsaaten, 5 bis 20 % Flohsamenschalen, 4 bis 20 % Eiklarpulver, 0 bis 40 % der Komponente d), z.B. in Form von Ölsaaten, 0,1 bis 6 % Salz und 1 bis 6 % Backtriebmittel.

In weiteren besonderen Ausführungsformen enthält die erfindungsgemäße Zusammensetzung bezogen auf die Trockenmasse 30 bis 70 % teilentöltes Mehl von Schalenfrüchten, 5 bis 20 % Flohsamenschalen, 4 bis 20 % Eiklarpulver, 0 bis 40 % der Komponente d), z.B. in Form von Ölsaaten oder Schalenfrüchten, 0,1 bis 6 % Salz und 1-6 % Backtriebmittel.

In weiteren besonderen Ausführungsformen enthält die erfindungsgemäße Zusammensetzung bezogen auf die Trockenmasse 30 bis 70 % teilentöltes Mehl von nicht-leguminosen Ölsaaten, 5 bis 20 % Flohsamenschalen, 4 bis 20 % Eiklarpulver, 0 bis 40 % der Komponente d), z.B. in Form von Ölsaaten oder Schalenfrüchten, 0,1 bis 6 % Salz und 1 bis 6 % Backtriebmittel.

In weiteren besonderen Ausführungsformen enthält die erfindungsgemäße Zusammensetzung bezogen auf die Trockenmasse 30 bis 70 % eines Gemischs wenigstens eines teilentölten Mehls von Schalenfrüchten und wenigstens eines teilentölten Mehls von nicht-leguminosen Ölsaaten, 5 bis 20 % Flohsamenschalen, 4 bis 20 % Eiklarpulver, 0 bis 40 % der Komponente d), z.B. in Form von Ölsaaten oder Schalenfrüchten, 0,1 bis 6 % Salz und 1 bis 6 % Backtriebmittel.

In weiteren besonderen Ausführungsformen enthält die erfindungsgemäße Zusammensetzung bezogen auf die Trockenmasse 20 bis 50 % teilentöltes Mehl von Schalenfrüchten und/oder nicht-leguminosen Ölsaaten, 20 bis 40 % Flohsamenschalen und 10 bis 40 % Volleipulver und 0 bis 40 % der Komponente d) z.B. in Form von Fett. Derartige Zusammensetzungen sind insbesondere zur Herstellung von Nudelteig geeignet und enthalten vorzugsweise kein oder weniger als 0,1 % Backtriebmittel.

In einer besonderen Ausführungsform sind die Komponenten a), b) und c) sowie gegebenenfalls weitere Zutaten der erfindungsgemäßen Zusammensetzung ausschließlich trockene Zutaten. Bei einer solchen besonderen Ausführungsform handelt es sich um eine Trockenbackmischung.

Die vorliegende Erfindung betrifft auch Back- oder Teigwaren, die ausgehend von einer erfindungsgemäßen Zusammensetzung hergestellt sind, z.B. Brot, brotähnliche Nahrungsmittel, wie Hot Dog Brötchen, Hamburger Brötchen, Knäckebrot oder Aufbackbrötchen, weiterhin Gebäck, Kekse, Kuchen, Torten, Pizza, Waffeln, Pfannkuchen, Muffins, Nudeln, Snacks, Riegel, Kräcker oder Teigfladen wie Wraps. Die erfindungsgemäßen Zusammensetzungen können auch zur Herstellung von Nudelteig und somit zur Herstellung von Nudeln eingesetzt werden.

Die Komponenten der erfindungsgemäßen Zusammensetzung werden miteinander vermischt, mit einer verzehrbaren Flüssigkeit, beispielsweise Wasser, Milch, Fruchtsaft etc., bevorzugt mit Wasser vermengt und gebacken bzw. gegart.

In einer besonderen Ausführungsform der Erfindung erfolgt die Herstellung von Back- und Teigwaren durch Vermengen der erfindungsgemäßen trockenen Backvormischung mit Wasser und anschließendes Formen und Backen.

In einer weiteren besonderen Ausführungsform der Erfindung erfolgt die Herstellung von Back-und Teigwaren durch Vermengen der erfindungsgemäßen trockenen Backvormischung mit Wasser und anschließendes Garen in kochendem Wasser.

In einer besonderen Ausführungsform der Erfindung erfolgt die Herstellung von Back- und Teigwaren durch Vermengen der erfindungsgemäßen trockenen Backvormischung mit Wasser und anschließendes Trocknen zur weiteren Aufbewahrung.

In einer besonderen Ausführungsform wird die erfindungsgemäße Zusammensetzung mit einer verzehrbaren Flüssigkeit zu einem Teig verarbeitet und durch Erhitzen gegart oder gebacken. In einer besonderen Ausführungsform handelt es sich bei der verzehrbaren Flüssigkeit um Wasser. Der daraus erhaltene Teig wird bei Temperaturen im Bereich von in der Regel 100 bis 230°C gebacken. Die Backzeit beträgt dabei vorzugsweise 30 bis 180 Minuten.

In einer besonderen Ausführungsform der Erfindung handelt es sich bei der Proteinkomponente um frische Eier oder Eipulver. Dabei ist es vorteilhaft, wenn die frischen Eier zuerst in Eiklar und Eigelb getrennt werden und das Eiklar zu Eischnee verarbeitet wird bzw. wenn es sich bei dem Eipulver um Eiklarpulver handelt, dass dieses mit Wasser gemischt und zu Eischnee verarbeitet wird, bevor die restlichen Zutaten damit vermengt werden.

In einer besonderen Ausführungsform wird die erfindungsgemäße Zusammensetzung, bei der es sich bei Komponente c) um frische Eier oder Eiklarpulver handelt, folgendermaßen verarbeitet: Die frischen Eier werden aufgetrennt, das Eiklar oder Eiklarpulver wird (ggf. mit Wasser) zu Eischnee geschlagen, anschließend mit Wasser und den übrigen Zutaten der erfindungsgemäßen Zusammensetzung zu einem Teig verarbeitet und bei 100-230 °C für 30-180 Minuten gebacken.

In einer besonderen Ausführungsform der Erfindung werden der erfindungsgemäßen Zusammensetzung darüber hinaus eine oder mehrere der folgenden Zutaten beigefügt: pflanzliches Fett, tierisches Fett, Essig, Fruchtsäfte, Milcherzeugnisse, glutenfreier Sauerteig, Vitamine, Mineralstoffe, Enzyme, Additive zur technologischen Verbesserung der Verarbeitung zur industriellen Herstellung von Back- und Teigwaren, Früchte, Pilze, Gemüse, Frischhefe.

In einer bevorzugten Ausführungsform der Erfindung enthält die Zusammensetzung eine oder mehrere der folgenden Komponenten:
a) als Komponente a) wenigstens ein Mehl, das unter teilentöltem Mandelmehl, teilentöltem Kokosmehl, teilentöltem Leinsamenmehl, teilentöltem Walnussmehl, teilentöltem Haselnussmehl, teilentöltem Sesammehl, teilentöltem Kürbiskernmehl, teilentöltem Traubenkernmehl ausgewählt ist,
b) als Komponente b) gemahlene Flohsamenschalen oder ganze Flohsamenschalen,
c) als Komponente c) Hühnereiweiß;
d) als Komponente d) einen oder mehrere Pflanzenbestandteile, die unter Kürbiskernen, Leinsamen, Sonnenblumenkerne, Sesam, Mohn, Erdnüssen und Apfelfaser ausgewählt sind,
e) Backpulver und Salz.

Eine solche Zusammensetzung eignet sich zur Herstellung von Back- und Teigwaren, die folgendes Nährstoffprofil aufweisen: Energie < ca. 250 kcal, > ca. 10 % Eiweiß, < ca. 6 % Kohlenhydrate, < ca. 10 % Fett. Sie sind damit für die Verwendung in Rahmen einer kohlenhydratreduzierten, kalorienreduzierten, fettreduzierten und glutenfreien Ernährungsweise geeignet.

In einer bevorzugten Ausführungsform der Erfindung enthält die Zusammensetzung eine oder mehrere der folgenden Komponenten:
a) als Komponente a) wenigstens ein Mehl, das unter teilentöltem Mandelmehl und teilentöltem Kokosmehl ausgewählt ist,
b) als Komponente b) gemahlene Flohsamenschalen oder ganze Flohsamenschalen,
c) als Komponente c) Hühnereiweiß;
e) Backpulver und Salz.

Eine solche Zusammensetzung eignet sich zur Herstellung von Back - und Teigwaren die folgendes Nährstoffprofil aufweisen: Energie ca. 120-180 kcal, ca. 10-15 % Eiweiß, ca. 2-6 % Kohlenhydrate, < ca. 6 % Fett und sind damit ganz besonders für die Verwendung in Rahmen einer kohlenhydratreduzierten, kalorienreduzierten, fettreduzierten und glutenfreien Ernährungsweise geeignet.

In einer weiteren besonderen Ausführungsform der Erfindung enthält die Zusammensetzung eine oder mehrere der folgenden Komponenten:
a) als Komponente a) wenigstens ein Mehl, das unter teilentöltem Mandelmehl, teilentöltem Kokosmehl, teilentöltem Leinsamenmehl, teilentöltem Walnussmehl, teilentöltem Haselnussmehl, teilentöltem Sesammehl, teilentöltem Kürbiskernmehl, teilentöltem 23 Traubenkernmehl, teilentöltem Macadamianussmehl, teilentöltem Haselnussmehl, teilentöltem Aprikosenkernmehl und teilentöltem Erdnussmehl ausgewählt ist,
b) als Komponente b) gemahlene Flohsamenschalen oder ganze Flohsamenschalen,
c) als Komponente c) Hühnereiweiß;
d) als Komponente d) Apfelfaser;
e) Backpulver und Salz.

Back - und Teigwaren aus einer solchen Zusammensetzung weisen folgendes Nährstoffprofil auf: Energie ca. 120-180 kcal, Eiweiß ca. 10-15 %, Kohlenhydrate ca. 2-6 %, Fett < ca. 6 % und sind damit ganz besonders für die Verwendung in Rahmen einer kohlenhydratreduzierten, kalorienreduzierten, fettreduzierten und glutenfreien Ernährungsweise geeignet.

Im Rahmen dieser Anmeldung ist mit der Angabe "ca." gemeint, dass nicht exakt die angegebenen prozentualen Anteile in der Zusammensetzung vorliegen müssen, sondern dass, unter anderem jedoch nicht ausschließlich durch Nährstoffschwankungen in Naturprodukten, auch leichte Abweichungen von den Zahlenangaben nach oben oder unten darunter zu verstehen sind.

Die aus der erfindungsgemäßen Zusammensetzung hergestellten Back- und Teigwaren eignen sich zur therapeutischen oder präventiven Behandlung von Krankheiten, die mit hohem Zucker- und Stärkekonsum oder mit einer Glutenunverträglichkeit in Verbindung gebracht werden oder bei denen ein Verzicht auf Gluten und/oder eine Einschränkung des Kohlenhydratkonsums als vorteilhaft angesehen wird, wie z.B. Diabetes Typ I und II, Zöliakie, entzündliche Darmerkrankungen wie Morbus Crohn und Ulzerative Colitis, Darmerkrankungen wie Leaky-Gut-Syndrom, metabolisches Syndrom, krankhaftes Übergewicht, neurodegenerative Krankheiten, Tumorerkrankungen sowie Erkrankungen, die durch entzündliche Prozesse hervorgerufen werden wie Rheuma und rheumatoide Arthritis.

Offenbart ist daher auch die erfindungsgemäße Back- und Teigware zur Behandlung und Prävention von Krankheiten.

Es versteht sich, dass die vorstehend genannten und nachstehend noch zu erläuternden Merkmale nicht nur in der jeweils angegebenen Kombination, sondern auch in anderen Kombinationen oder auch in Alleinstellung verwendbar sind ohne den Rahmen der vorliegenden Erfindung zu verlassen.

Eine Ausführungsform der Erfindung wird in den nachstehenden Beispielen näher erläutert und mit dem Stand der Technik verglichen. Bei den näher erläuterten Ausführungsformen handelt es sich um Brote, die jeweils aus einer Backvormischung, bestehend aus der erfindungsgemäßen Zusammensetzung, hergestellt wird.

Hierzu wird zunächst eine Backvormischung aus nachfolgend aufgeführten Zutaten (Beispiel 1-6) hergestellt und mit der angegebenen Menge an Wasser zu einem Teig verarbeitet.
Beispiel 1: 70 g teilentöltes Mandelmehl, 60 g teilentöltes Leinsamenmehl, 60 g Sonnenblumenkerne, 20 g Leinsamen, 10 g Traubenkernmehl, 25 g Flohsamenschalen, 30 g Eiklarpulver, 18 g Backpulver, 6 g Salz, 420 g Wasser.
Beispiel 2: 85 g teilentöltes Mandelmehl, 25 g teilentöltes Kokosmehl, 10 g teilentöltes Leinsamenmehl, 5 g Sesammehl, 30 g Flohsamenschalen, 25 g Eiklarpulver, 18 g Backpulver, 6 g Salz, 400 g Wasser.
Beispiel 3: 100 g teilentöltes Mandelmehl, 35 g teilentöltes Kokosmehl, 30 g Flohsamenschalen, 35 g Eiklarpulver, 15 g Backpulver, 8 g Salz, 390 g Wasser.
Beispiel 4: 40 g teilentöltes Kokosmehl, 45 g teilentöltes Goldleinsamenmehl, 20 g teilentöltes Haselnussmehl, 40 g teilentöltes Kürbiskernmehl, 30 g Eiklarpulver, 30 g Flohsamenschalen, 15 g Backpulver, 6 g Salz, 400 g Wasser.
Beispiel 5: 45 g teilentöltes Goldleinsamenmehl, 40 g teilentöltes Leinsamenmehl, 40 g teilentöltes Kürbiskernmehl, 5 g teilentöltes Kürbiskernmehl, 20 g Apfelfaser, 25 g Eiklarpulver, 25 g Flohsamenschalen, 15 g Backpulver, 8 g Salz.
Beispiel 6: 40 g teilentöltes Kokosmehl, 40 g teilentöltes Sonnenblumenkernmehl, 25 g teilentöltes Sesammehl, 35 g teilentöltes Goldleinsamenmehl, 40 g Eiklarpulver, 30 g Flohsamenschalen, 15 g Backpulver, 6 g Salz.

Die Zutaten werden gut durchmischt und anschließend mit einer definierten Menge Wasser versetzt und solange gerührt, bis ein homogener Teig entstanden ist. Der Teig wird im vorgeheizten Backofen bei 175°C etwa 60 Minuten gebacken und anschließend auf einem Gitter abkühlen gelassen.

Die daraus resultierenden Brote weisen die in Tabelle 1 (Beispiel 1-3) aufgeführten Nährstoffprofile auf.

Zum Vergleich der Nährstoffprofile wurden verschiedene Backvormischungen aus dem Stand der Technik (Backvormischungen 4 bis 8) herangezogen.
1.) Beispielbrot 1 aus einer erfindungsgemäßen Backvormischung gemäß Beispiel 1
2.) Beispielbrot 2 aus einer erfindungsgemäßen Backvormischung gemäß Beispiel 2
3.) Beispielbrot 3 aus einer erfindungsgemäßen Backvormischung gemäß Beispiel 3
4.) Vergleichsbrot 1: Bauernkruste (Hersteller: Aurora Mühlen GmbH, Hamburg)
5.) Vergleichsbrot 2: Brot-Mix Mix B/Rezept Kastenbrot (Hersteller: Dr. Schär AG, Burgstall)
6.) Vergleichsbrot 3: Glutenfreies LowCarb-Weissbrot (Hersteller: Erdschwalbe Bioprodukte Thomas Zimmermann, Neu-Ulm)
7.) Vergleichsbrot 4: Eiweißbrot (Hersteller: Küchenmeister, Frießinger Mühle GmbH, Bad Wimpfen)
8.) Vergleichsbrot 5: Saaten-Bauernbrot, glutenfrei (Hersteller, Hanneforth food for you GmbH & Co.KG, Horn-Bad Meinberg)

Wie aus Tabelle 1 ersichtlich, weisen die drei aus der erfindungsgemäßen Zusammensetzung hergestellten beispielhaften Brote (Beispielbrote 1, 2 und 3) das in der Aufgabenstellung beschriebene Nährstoffprofil (Kohlenhydrate < 15 %, bevorzugt < 10%, Eiweiß > 10 %, Fett 1 % - 40 %) auf. Der Kohlenhydratgehalt ist gegenüber dem herkömmlichen Brot (kohlenhydratreich und glutenhaltig) aus Backvormischung 4 (mit über 40 %) auf ca. 3-5 % reduziert. Dahingegen enthält das glutenfreie Brot aus Backvormischung 5 sogar einen Kohlenhydratanteil von über 70 %, während das ebenfalls glutenfreie Brot aus Backvormischung 8 zwar weniger Kohlenhydrate als die Brote aus den Backvormischungen 4 und 5, jedoch immer noch mehr als 30 % Kohlenhydrate aufweist. Das Brot aus Backvormischung 7 weist zwar ein Nährstoffprofil auf, das der Aufgabenstellung entspricht, jedoch besteht diese Backvormischung zu einem großen Teil aus Gluten. Lediglich das Brot aus Backvormischung 6 weist ein Nährstoffprofil auf, das der Aufgabenstellung entspricht.

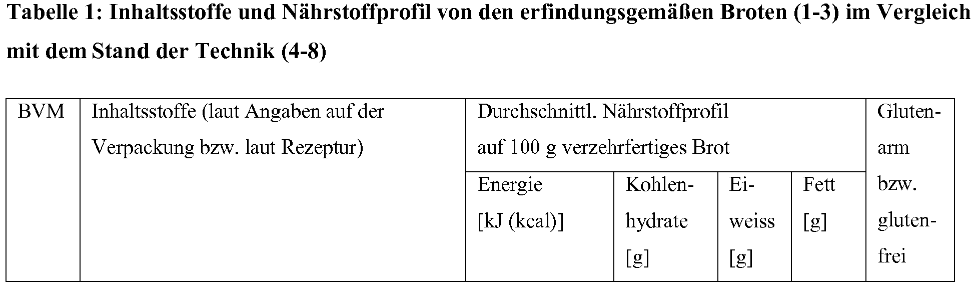

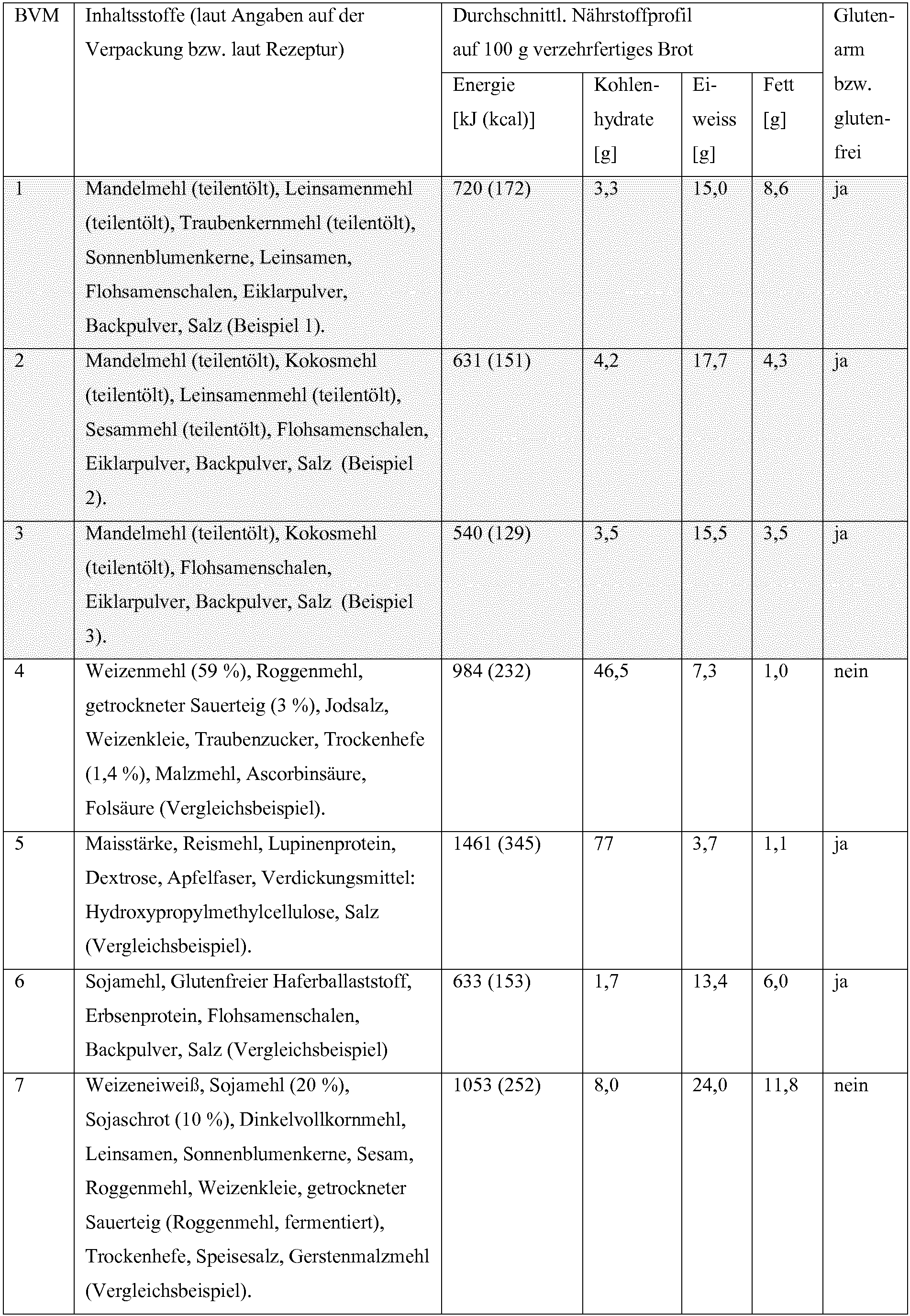

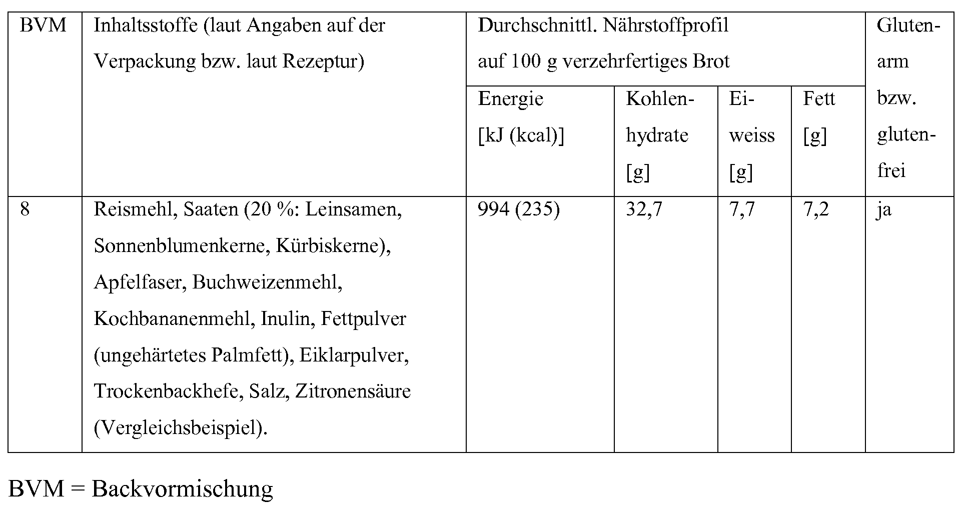

Zum Vergleich der organoleptischen Eigenschaften wurden aus den Backvormischungen der Beispiele 1 bis 3 sowie den Backvormischungen 4 bis 8 gemäß aus dem Stand der Technik die entsprechenden Brote hergestellt und mit einem Beispiel des erfindungsgemäßen Brotes (bestehend aus der erfindungsgemäßen Zusammensetzung) verglichen. Die Auswahl der Backvormischungen aus dem Stand der Technik erfolgte nach der Vorgabe, dass es sich bei den daraus herzustellenden Broten um ähnliche Brotarten handeln sollte. Konkret bedeutet dies, dass beispielsweise das erfindungsgemäße Brot aus Beispiel 3 ein helles, mild schmeckendes Brot ergibt, das einem herkömmlichen hellen Weizenmischbrot ähnelt, dementsprechend wurden also für die vergleichenden Beispiele ein handelsübliches Weizenmischbrot "Aurora Bauernkruste" (Backvormischung 4) ausgewählt. Darüber hinaus wurde der "Schär Brot-Mix" (Backvormischung 5) sowie das "Erdschwalbe Glutenfreies Low-Carb Weißbrot" (Backvormischung 6) ausgewählt.

Um einen sinnvollen Vergleich mit dem Stand der Technik zu ermöglichen, wurde der folgende Vergleichsversuch durchgeführt:
Aus den zu untersuchenden Backvormischungen wurde jeweils nach der dafür vorgesehenen Anleitung ein Brotteig hergestellt. Anschließend wurden exakt 500 g des zubereiteten Brotteiges in eine Form mit den Maßen BxTxH 15x5x7 cm gegeben, gleichmäßig verteilt und die Füllhöhe in der Backform gemessen. Anschließend wurden die Brote in einem handelsüblichen Backofen nach Anleitung ausgebacken.

Nach Abkühlen des fertigen Brotes wurde erneut die Füllhöhe in der Backform gemessen. Darüber hinaus wurde die spezifische Dichte der Brote durch Gewichts- und Volumenmessung bestimmt. Die Volumenmessung wurde in Anlehnung an die Rapssamenverdrängungsmethode (Volumeter nach Fornet, auch beschrieben in AACCI Method 10-05.01) wie folgt durchgeführt: In einem Messbecher geeigneter Größe wurde der Brotlaib platziert, der freie Raum des Gefäßes so hoch mit Sesamsamen gefüllt bis der Brotlaib mindestens vollständig bedeckt ist und anschließend das Volumen abgelesen. Anschließend wurde der Brotlaib entfernt und das Volumen derselben Menge Sesamsamen bestimmt. Die Differenz der beiden Volumina ergibt das Volumen des Brotlaibes. Die spezifische Dichte erhält man durch Division des gemessenen Volumens durch das gemessene Gewicht; das spezifische Volumen ist der Kehrwert der spezifischen Dichte.

Zur weiteren Beurteilung wurde aus der Mitte des Laibes eine 1 cm dicke Scheibe geschnitten und nach Form, Aussehen, Farbe, Konsistenz, Textur und Geschmack beurteilt. Die Beurteilung wurden in Anlehnung an die Kriterien des DLG-5-Punkte-Schema für Brot vorgenommen (Deutsche Landwirtschafts-Gesellschaft e.V.).

Darüber hinaus wurde außerdem die Zubereitung der Brote aus den Backvormischungen auf Einfachheit, Handhabung und Dauer bewertet.

Die Ergebnisse der Vergleichsversuche sind in Tabelle 2 zusammengefasst.

Wie aus Tabelle 2 ersichtlich, erhält man mit der erfindungsgemäßen Zusammensetzung, hier am Beispiel einer Brotbackvormischung gezeigt, ein Brot (Beispiel 3), dessen organoleptischen Eigenschaften denen eines herkömmlichen Weizenmischbrotes (Beispiel 4) weitestgehend entsprechen. In einigen Punkten, wie der Zubereitungsgeschwindigkeit und der Krustenbeschaffenheit ist das Brot aus der erfindungsgemäßen Zusammensetzung (Beispiel 3) sogar dem herkömmlichen Weizenmischbrot (Beispiel 4) überlegen.

Im Vergleich zu dem ebenfalls glutenfreien, jedoch kohlenhydratreichen Brot aus Beispiel 5 zeigt das Brot aus der erfindungsgemäßen Zusammensetzung (Backvormischung gemäß Beispiel 3) in der Mehrzahl der Bewertungskategorien deutliche Vorteile, welche sich so zusammenfassen lassen, dass die organoleptischen Eigenschaften des Brotes aus Backvormischung 5 weit entfernt sind von denen des herkömmlichen Brotes (Backvormischung 4). Eine Ausnahme bilden Geschmack und spezifische Dichte des Brotes - hier erzielen die Backvormischung des erfindungsgemäßen Beispiels 3 ein ähnliches Ergebnis wie die Broten aus den Backvormischungen 4 und 5 des Standes der Technik.

Das Brot aus Backvormischung 6 unterscheidet sich in fast allen Bewertungskategorien deutlich von allen anderen Beispielen, und in allen Kategorien von dem herkömmlichen Weizenmischbrot aus Backvormischung 4. Besonders hervorzuheben ist die insgesamt sehr kompakte Struktur mit fast vollständig fehlender Lockerung, was sich auch aus der gemessenen spezifischen Dichte (1,7-fach erhöht im Vergleich zum herkömmlichen Brot aus Backvormischungen 4) und der geringen Höhendifferenz vor/nach dem Backen eindeutig ablesen lässt. Des Weiteren zu bemängeln sind der intensive Beigeschmack sowie der Geruch nach Sojamehl. Lediglich positiv zu erwähnen ist die einfache Zubereitungsweise, die vergleichbar schnell geht wie die für Beispiel 3.

**Tabelle 2: Vergleich der organoleptischen Eigenschaften**

| **Backvormischung** | **3** | **4⁺** | **5⁺** | **6⁺** |
|---|---|---|---|---|
| **Zubereitung** | Die Backmischung mit Wasser vermischen und kurz verrühren, es bildet sich ein leicht zu formender Teig | Zwei längere Teigruhen erforderlich, Teig leicht zu formen | Backmischung mit Wasser vermischen, es bildet sich eine zähe, klebrige Masse, die sich schwer in die Form geben lässt, längere Teigruhe nötig | Die Backmischung mit Wasser vermischen und kurz verrühren, es bildet sich ein leicht zu formender Teig |
| **Zeitaufwand vor dem Backen** | 5 min | 1 Stunde | 30 min | 5 min |
| **Höhendifferenz vor*/nach dem Backen [cm]** | 3,7 | 3,8 | 5 | 1,5 |
| **Spez. Dichte [g/cm³]** | 0,44 | 0,42 | 0,41 | 0,71 |
| **Spezifisches Volumen [cm³/g]** | 2,30 | 2,38 | 2,45 | 1,42 |
| **Krustenfarbe** | Gold-braun | Dunkles Gold-braun | Beige-weiß, (brotuntypisch) | Gold-gelb |
| **Oberfläche und Kruste** | Gleichmäßige Oberfläche, flexible und stabile Kruste | Kraterbildung auf der Oberseite, sonst gleichmäßige Oberfläche, harte Kruste | Ungleichmäßige Oberfläche mit weißen Rissen, sehr harte Kruste | Gleichmäßige Oberfläche, flexible und stabile Kruste |
| **Lockerung und Krumenbild** | Gute Lockerung, gleichmäßiges Krumenbild, gleichmäßige Porengrößenverteilung | Gute Lockerung, gleichmäßiges Krumenbild, gleichmäßige Porengrößenverteilung | Übermäßige Lockerung, ungleichmäßige Porengrössenverteilung (grössere Poren oben, kompaktere Struktur unten) | geringe Lockerung, Krumenbild nicht brottypisch |
| **Struktur und Elastizität** | Stabile Krume mit brottypischer Elastizität, brottypischer Bruch | Stabile Krume mit brottypischer Elastizität, brottypischer Bruch | Stabile Krume mit brotuntypisch geringer Elastizität, bricht früher bei Dehnung oder Biegung als 3 und 4 | Sehr kompakte Struktur, wenig Elastizität, bricht sofort bei Dehnung oder Biegung |
| **Konsistenz und Mundgefühl** | Brottypisch, vergleichbar mit 4 | brottypisch | mehlig | Brotuntypisch, gummartig |
| **Geruch** | Milder, brottypischer Geruch, erinnert an ein helles Weizenbrot | Brottypischer Geruch, angenehme Hefenote, mild | Brottypischer Geruch, angenehme Hefenote, mild | starker, brotuntypischer Geruch nach Sojamehl |
| **Geschmack** | Milder Geschmack, erinnert an ein helles Weizenbrot, neutral bis unauffällig, schwaches Mandelaroma | Brottypischer Geschmack, angenehme Hefenote, mild | Angenehme Hefenote, Broteigengeschmack neutral bis unauffällig | Brotuntypisch, starker Beigeschmack nach Soja |
| **Gesamteindruck** | Kaum zu unterscheiden vom Standard, dem herkömmlichen Brot, Zubereitung sehr einfach | "Standard", herkömmliches Brot | Unnatürlich wirkendes Nahrungsmittel, nur bedingt als Ersatz für das Standard-Brot anzusehen | Absolut brotuntypisches Erscheinungsbild, intensiver Geruch und Geschmack nach Soja |

| | | | | |
|---|---|---|---|---|
| * Bei den Broten, die vor dem Backen während der Teigruhe eine Volumenzunahme erfahren, wurde die Teighöhe vor der Teigruhe bestimmt. + Stand der Technik | | | | |

Zusammenfassend lassen sich aus den durchgeführten Vergleichsversuchen und dem Nährstoffvergleich folgende Aussagen treffen: Von den Broten aus dem Stand der Technik weisen einige einen geringen Kohlenhydratgehalt auf, sind aber meist nicht glutenfrei. Von den Broten, die glutenfrei sind, weisen die meisten einen hohen Kohlenhydratgehalt auf. Das von dieser Sorte genauer untersuchte Brot aus Backvormischung 5 weicht jedoch in seinen organoleptischen Eigenschaften in einigen Punkten von dem als Standard hinzugezogenen herkömmlichen Weizenmischbrot (Backvormischung 4) ab. Lediglich das Brot von einem Hersteller (Backvormischung 6) ist in seinem Nährstoffprofil mit den erfindungsgemäßen Broten (Beispiel 1, 2 und 3), die aus der erfindungsgemäßen Zusammensetzung hergestellt wurden, vergleichbar. Beispiel 6 weicht jedoch in seinen organoleptischen Eigenschaften so stark von dem als Standard hinzugezogenen herkömmlichen Weizenmischbrot (Backvormischung 4) ab, dass es im Rahmen einer kohlenhydratarmen und glutenfreien Ernährungsweise kaum als annehmbarer Ersatz für herkömmliches Brot geeignet ist.

Dahingegen zeigen die erfindungsgemäßen Brote (Beispiel 1, 2 und 3), die aus der erfindungsgemäßen Zusammensetzung hergestellt wurden, das in der Aufgabenstellung geforderte Nährstoffprofil, lassen sich einfach und schnell herstellen und weisen organoleptische Eigenschaften auf, welche gleichwertig sind zu einem herkömmlichen Brot.

## Patentansprüche

1. Zusammensetzung für die Herstellung von Back- und Teigwaren, welche die folgenden Komponenten enthält:
a. Mehl, gewonnen aus ein oder mehreren Schalenfrüchten und/oder Ölsaaten von nicht-Leguminosen, in einer Menge von 20 bis 80 Gew.-%, bezogen auf Trockenmasse der Komponenten a), b) und c), wobei das Mehl wenigstens ein teilentöltes Mehl mit einem Fettgehalt unter 30 Gew.-% in einer Menge von wenigstens 20 Gew.-%, bezogen auf das Gesamtgewicht des Mehls, enthält und wobei die Komponente a) maximal 75 Gew.-%, bezogen auf das Gesamtgewicht der Komponenten a), Kokosmehl enthält,
b. Schleimpolysaccharide enthaltendes Pflanzenerzeugnis oder aus diesen Pflanzenerzeugnissen isolierte Schleimpolysaccharide in einer Menge von 5 bis 40 Gew.-%, bezogen auf Trockenmasse der Komponenten a), b) und c),
c. Proteinkomponente, in einer Menge von 4 bis 40 Gew.-%, bezogen auf Trockenmasse der Komponenten a), b) und c), wobei die Komponente c) ausgewählt ist unter Eiern, Eiklar und Eierzeugnissen, wobei die Eierzeugnisse ausgewählt sind unter Volleipulver und Eiklarpulver,
wobei die Zusammensetzung maximal 0,1 Gew.-% Gluten enthält,
wobei der Anteil der Gesamtmenge der Komponenten a), b) und c) an der Zusammensetzung, jeweils gerechnet als Trockenmasse der Komponenten a), b) und c), an der Gesamttrockenmasse der Zusammensetzung, wenigstens 60 Gew.-% beträgt,
wobei die Zusammensetzung weniger als 15 Gew.-% an verwertbaren Kohlenhydraten enthält, und
wobei die Zusammensetzung weniger als 15 Gew.-% Sojaerzeugnisse, bezogen auf die Gesamtmenge der Trockenbestandteile der Zusammensetzung, enthält.

2. Zusammensetzung gemäß Anspruch 1, **dadurch gekennzeichnet, dass** sie weniger als 20 mg/kg Gluten enthält.

3. Zusammensetzung gemäß Anspruch 1 oder 2, wobei die Schalenfrüchte ausgewählt sind aus der Gruppe bestehend aus Mandeln, Kokosnüssen, Aprikosenkernen, Mangokernen, Granatapfelkernen, Pfirsichkernen, Pekannüssen, Pistazien, Walnüssen, Kastanien, Haselnüssen, Bucheckern, Eicheln, Hanfnüssen, Macadamianüssen, Steinnüssen, Wassernüssen, Erdnüssen, Cashewnüssen, Pinienkernen, und Paranüssen und wobei die Ölsaaten ausgewählt sind unter Leinsamen, Goldleinsamen, Sonnenblumenkernen, Kürbiskernen, Sesam, Chia-Samen und Mohnsamen.

4. Zusammensetzung gemäß einem der Ansprüche 1 bis 3, **dadurch gekennzeichnet, dass** Komponente a) wenigstens ein teilentöltes Mehl mit einem Fettgehalt unter 30 Gew.-% in einer Menge von wenigstens 50 Gew.-%, bezogen auf die Gesamtmenge des Mehls enthält.

5. Zusammensetzung gemäß einem der Ansprüche 1 bis 4, **dadurch gekennzeichnet, dass** es sich bei Komponente a) um eine oder mehrere Mehle handelt, die ausgewählt sind aus der Gruppe bestehend aus teilentöltem Mandelmehl, teilentöltem Kokosmehl, teilentöltem Walnussmehl, teilentöltem Erdnussmehl, teilentöltem Aprikosenkernmehl, teilentöltem Haselnussmehl, teilentöltem Macadamianussmehl, teilentöltem Leinsamenmehl, teilentöltem Goldleinsamenmehl, teilentöltem Kürbiskernmehl, teilentöltem Sesammehl, teilentöltem Mohnmehl und teilentöltem Sonnenblumenmehl.

6. Zusammensetzung nach einem der Ansprüche 1 bis 5,
(1) wobei die Komponente a) maximal 50 Gew.-%, bezogen auf das Gesamtgewicht der Komponenten a), Kokosmehl enthält und/oder
(2) wobei die Komponente a) mindestens 25 Gew.-%, bezogen auf die Komponente a), teilentöltes Mandelmehl enthält.

7. Zusammensetzung gemäß einem der Ansprüche 1 bis 6, **dadurch gekennzeichnet, dass** es sich bei Komponente b) um
(1) eine oder mehrere Pflanzenerzeugnisse, ausgewählt aus der Gruppe bestehend aus Flohsamen, Flohsamenschalen, indische Flohsamen und indischen Flohsamenschalen, und/oder um
(2) eine oder mehrere, aus diesen Pflanzenerzeugnissen isolierte Schleimpolysaccharide handelt.

8. Zusammensetzung gemäß einem der Ansprüche 1 bis 7, **dadurch gekennzeichnet, dass** die Komponente b) Flohsamenschalen oder daraus gewonnenen Erzeugnissen enthält.

9. Zusammensetzung gemäß einem der Ansprüche 1 bis 8, **dadurch gekennzeichnet,**
(1) **dass** sie zusätzlich zu den Komponenten a), b) und c) eine oder mehrere essbare Pflanzenbestandteile in ganzer oder in einer zerkleinerten, von einem Mehl verschiedenen Form enthält, wobei die essbaren Pflanzenbestandteile ausgewählt sind aus der Gruppe bestehend aus Hülsenfrüchten, Ölsamen, Schalenfrüchten, glutenfreien Getreiden und glutenfreien Pseudogetreiden,
und/oder
(2) **dass** sie zusätzlich eine oder mehrere Komponenten, ausgewählt aus der Gruppe bestehend aus Salz, Backtriebmitteln, Aromastoffen, Gewürzen, Süßungsmitteln, pflanzlichen Fetten und tierischen Fetten, und/oder zusätzlich ballaststoffhaltige Zusätze, ausgewählt aus der Gruppe bestehend aus Apfelfaser, Haferfaser, Erbsenfaser, Kartoffelfaser, Mandelfaser, Kokosfaser, Cellulosefaser, Hagebuttenkernfaser, Brombeerkernfaser, Granatapfelkernfaser und Inulin, und/oder zusätzlich ein pflanzliches Proteinisolat, ausgewählt aus der Gruppe bestehend aus Reisprotein, Kartoffelprotein, Erbsenprotein, Chiasamenprotein und Hanfprotein enthält.

10. Zusammensetzung nach einem der Ansprüche 1 bis 9, **dadurch gekennzeichnet, dass** es sich bei der Komponente c) um Eiklarpulver handelt.

11. Zusammensetzung nach Anspruch 10, **dadurch gekennzeichnet, dass** sie, bezogen auf die Trockenmasse der Zusammensetzung, 20-70 Gew.-% teilentöltes Mehl von Schalenfrüchten und/oder nicht-Leguminosen Ölsaaten, 5-40 Gew.-% Flohsamenschalen und 4-40 Gew.-% Eiklarpulver enthält oder dass sie, bezogen auf die Trockenmasse der Zusammensetzung, 30-70 Gew.-% teilentöltes Mehl von Schalenfrüchten, 5-20 Gew.-% Flohsamenschalen, 4-20 Gew.-% Eiklarpulver, 0-40 Gew.-% Ölsaaten, 0.1-6 Gew.-% Salz und 1-6 Gew.-% Backtriebmittel enthält.

12. Zusammensetzung nach einem der Ansprüche 1 bis 9, **dadurch gekennzeichnet, dass** es sich bei der Komponente c) um frische Eier handelt.

13. Zusammensetzung nach einem der Ansprüche 1 bis 12 in Form einer Backvormischung.

14. Zusammensetzung nach einem der Ansprüche 1 bis 13 in Form einer ersten Zusammensetzung, enthaltend die Komponenten a) und b) und einer zweiten Zusammensetzung, enthaltend die Komponente c).

15. Verfahren zur Herstellung von Back- und Teigwaren, **dadurch gekennzeichnet, dass** die Zusammensetzung gemäß einem der Ansprüche 1 bis 14 durch Zugabe von einer verzehrbaren Flüssigkeit zu einem Teig verarbeitet und durch Erhitzen gegart oder gebacken wird,
(1) wobei man insbesondere zusammen mit der Zusammensetzung eine oder mehrere der folgenden Zutaten verwendet, die ausgewählt sind aus der Gruppe bestehend aus Wasser, pflanzlichem Fett, tierischem Fett, Essig, Fruchtsäften, Milcherzeugnissen, glutenfreiem Sauerteig, Vitaminen, Mineralstoffen, Enzymen, Additiven zur technologischen Verbesserung der Verarbeitung zur industriellen Herstellung von Back- und Teigwaren, Früchten, Pilzen, Gemüse und Frischhefe und/oder
(2) wobei insbesondere die verzehrbare Flüssigkeit Wasser ist und der Teig bei 100-230°C für 30-180 Minuten gebacken wird.

16. Back- und Teigwaren, hergestellt aus einer Zusammensetzung nach einem der Ansprüche 1 bis 14 und/oder erhältlich durch ein Verfahren gemäß Anspruch 15.

17. Back- und Teigware gemäß Anspruch 16, ausgewählt aus der Gruppe bestehend aus Brot, brotähnlichen Nahrungsmitteln, Gebäck, Keksen, Kuchen, Torten, Pizza, Waffeln, Pfannkuchen, Muffins, Nudeln, Snacks, Riegeln, Kräckern und Wraps.

18. Verwendung einer Zusammensetzung nach einem der Ansprüche 1 bis 14 zur Herstellung von Back- und Teigwaren, insbesondere zur Herstellung von Brot.

## Claims

1. A composition for preparing bakery products and farinaceous goods, which comprises the following components:
a. flour obtained from one or more shell fruits and/or oilseeds of non-legumes, in an amount of from 20 to 80% by weight, based on dry matter of the components a), b) and c), wherein the flour comprises at least one partially deoiled flour having a fat content of less than 30% by weight in an amount of at least 20% by weight, based on the total weight of the flour, and wherein the component a) comprises a maximum of 75% by weight, based on the total weight of the components a), of coconut flour;
b. mucilaginous polysaccharide-comprising plant product or mucilaginous polysaccharides isolated from said plant products in an amount of from 5 to 40% by weight, based on dry matter of the components a), b) and c),
c. protein component in an amount of from 4 to 40% by weight, based on dry matter of the components a), b) and c), wherein the component c) is selected from eggs, egg white and egg products, wherein the egg products are selected from whole egg powder and egg white powder,
wherein the composition comprises a maximum of 0.1% by weight of gluten,
wherein the fraction of the total amount of the components a), b) and c) of the composition, in each case calculated as dry matter of the components a), b) and c), of the total dry matter of the composition is at least 60% by weight,
wherein the composition comprises less than 15% by weight of of utilizable carbohydrates, and
wherein the composition comprises less than 15% by weight of soy products, based on the total amount of the dry components of the composition.

2. The composition according to claim 1, **characterized in that** it comprises less than 20 mg/kg of gluten.

3. The composition according to claim 1 or 2, wherein the shell fruits are selected from the group consisting of almonds, coconuts, apricot kernels, mango kernels, pomegranate seeds, peach stones, pecan nuts, pistachios, walnuts, chestnuts, hazelnuts, beechnuts, acorns, hemp nuts, macadamia nuts, ivory nuts, water chestnuts, peanuts, cashew nuts, pine kernels and brazil nuts, and wherein the oilseeds are selected from linseeds, golden linseeds, sunflower seeds, pumpkin seeds, sesame seeds, chia seeds and poppy seeds.

4. The composition according to any one of claims 1 to 3, **characterized in that** component a) comprises at least one partially deoiled flour having a fat content of less than 30% by weight in an amount of at least 50% by weight, based on the total amount of flour.

5. The composition according to any one of claims 1 to 4, **characterized in that** component a) is one or more flours that are selected from the group consisting of partially deoiled almond flour, partially deoiled coconut flour, partially deoiled walnut flour, partially deoiled peanut flour, partially deoiled apricot kernel flour, partially deoiled hazelnut flour, partially deoiled macadamia nut flour, partially deoiled linseed flour, partially deoiled golden linseed flour, partially deoiled pumpkin seed flour, partially deoiled sesame seed flour, partially deoiled poppy flour and partially deoiled sunflower seed flour.

6. The composition according to any one of claims 1 to 5,
(1) wherein the component a) comprises a maximum of 50% by weight, based on the total weight of the components a), of coconut flour and/or
(2) wherein the component a) comprises at least 25% by weight, based on the component a), of partially deoiled almond flour.

7. The composition according to any one of claims 1 to 6, **characterized in that** component b) is
(1) one or more plant products selected from the group consisting of psyllium, psyllium husks, blond psyllium and blond psyllium husks, and/or
(2) one or more mucilaginous polysaccharides isolated from said plant products.

8. The composition according to any one of claims 1 to 7, **characterized in that** the component b) comprises psyllium husks or products obtained therefrom.

9. The composition according to any one of claims 1 to 8, **characterized in that**,
(1) in addition to the components a), b) and c), it comprises one or more edible plant components in whole or comminuted form that is different from a flour, wherein the edible plant components are selected from the group consisting of legumes, oil seeds, shell fruits, gluten-free cereals and gluten-free pseudocereals and/or
(2) it additionally comprises one or more components selected from the group consisting of salt, baking agents, flavoring agents, spices, sweeteners, vegetable fats and animal fats, and/or additionally dietary fiber-comprising additives, selected from the group consisting of apple fiber, oat fiber, pea fiber, potato fiber, almond fiber, coconut fiber, cellulose fiber, rosehip seed fiber, blackberry seed fiber, pomegranate seed fiber and inulin, and/or in addition a vegetable protein isolate selected from the group consisting of rice protein, potato protein, pea protein, chia seed protein and hemp protein.

10. The composition according to any one of claims 1 to 9, **characterized in that** the component c) is egg white powder.

11. The composition according to claim 10, **characterized in that** it comprises, based on the dry matter of the composition, 20-70% by weight of partially deoiled flour of shell fruits and/or non-leguminous oilseeds, 5-40% by weight of psyllium husks and 4-40% by weight of egg white powder or, it comprises, based on the dry matter of the composition, 30-70% by weight of partially deoiled flour of shell fruits, 5-20% by weight of psyllium husks, 4-20% by weight of egg white powder, 0-40% by weight of oilseeds, 0.1-6% by weight of salt and 1-6% by weight of baking agent.

12. The composition according to any one of claims 1 to 9, **characterized in that** the component c) is fresh eggs.

13. The composition according to any one of claims 1 to 12 in the form of a baking premix.

14. The composition according to any one of claims 1 to 13 in the form of a first composition comprising the components a) and b), and a second composition comprising the component c).

15. A method for preparing bakery products and farinaceous goods, **characterized in that** the composition according to any one of claims 1 to 14 is processed to form a dough by adding a consumable liquid and is cooked or baked by heating,
(1) wherein in particular together with the composition, one or more of the following ingredients is used that are selected from the group consisting of water, vegetable fat, animal fat, vinegar, fruit juices, milk products, gluten-free sourdough, vitamins, minerals, enzymes, additives for the technological improvement of the processing for the industrial preparation of bakery products and farinaceous goods, fruits, mushrooms, vegetables and fresh yeast and/or
(2) wherein in particular the consumable liquid is water and the dough is baked at 100-230°C for 30-180 minutes.

16. Bakery products or farinaceous goods, produced from a composition according to any one of claims 1 to 14 and/or obtainable by a method according to claim 15.

17. The bakery products or farinaceous goods according to claim 16, selected from the group consisting of bread, bread-like foods, pastries, biscuits, cakes, pies, pizza, waffles, pancakes, muffins, noodles, snacks, bars, crackers and wraps.

18. Use of a composition according to any one of claims 1 to 14 for preparing bakery products and farinaceous goods, in particular for preparing bread.

## Revendications

1. Composition destinée à la production de produits de boulangerie et de pâtes alimentaires, qui contient les composants suivants :
a) de la farine, obtenue à partir d'un ou de plusieurs fruits à coque et/ou de graines oléagineuses autres que de légumineuses, en une quantité de 20 à 80 % en poids, par rapport à la masse sèche des composants a), b) et c), la farine contenant au moins une farine partiellement déshuilée ayant une teneur en matières grasses inférieure à 30 % en poids en une quantité d'au moins 20 % en poids, par rapport au poids total de la farine, et le composant a) contenant au plus 75 % en poids, par rapport au poids total du composant a), de farine de coco,
b) des produits végétaux contenant des polysaccharides de mucilage ou des polysaccharides de mucilage isolés à partir de ces produits végétaux, en une quantité de 5 à 40 % en poids, par rapport à la masse sèche des composants a), b) et c),
c) un composant protéique, en une quantité de 4 à 40 % en poids, par rapport à la masse sèche des composants a), b) et c), le composant c) étant choisi parmi les oeufs, le blanc d'oeuf et les produits à base d'oeufs, les produits à base d'oeufs étant choisis parmi la poudre d'oeufs entiers et la poudre de blanc d'oeuf,
la composition contenant au plus 0,1 % en poids de gluten,
la proportion de la quantité totale des composants a), b) et c) par rapport à la composition, à chaque fois calculée en tant que masse sèche des composants a), b) et c), par rapport à la masse sèche totale de la composition, étant d'au moins 60 % en poids,
la composition contenant moins de 15 % en poids de glucides utilisables, et
la composition contenant moins de 15 % en poids de produits de soja, par rapport à la quantité totale des constituants secs de la composition.

2. Composition selon la revendication 1, **caractérisée en ce qu'**elle contient moins de 20 mg/kg de gluten.

3. Composition selon la revendication 1 ou 2, dans laquelle les fruits à coque sont choisis dans le groupe constitué par les amandes, les noix de coco, les noyaux d'abricot, les noyaux de mangue, les graines de grenade, les noyaux de pêches, les noix de pécan, les pistaches, les noix, les châtaignes, les noisettes, les faînes, les glands, les graines de chanvre, les noix de macadamia, le corozo, les châtaignes d'eau, les arachides, les noix de cajou, les pignons de pin et les noix du Brésil, et dans laquelle les graines oléagineuses sont choisies parmi les graines de lin, les graines de lin doré, les graines de tournesol, les graines de courge, les graines de sésame, les graines de chia et les graines de pavot.

4. Composition selon l'une quelconque des revendications 1 à 3, **caractérisée en ce que** le composant a) contient au moins une farine partiellement déshuilée ayant une teneur en matières grasses inférieure à 30 % en poids en une quantité d'au moins 50 % en poids, par rapport à la quantité totale de la farine.

5. Composition selon l'une quelconque des revendications 1 à 4, **caractérisée en ce que** le composant a) consiste en une ou plusieurs farines, qui sont choisies dans le groupe constitué par la farine d'amande partiellement déshuilée, la farine de coco partiellement déshuilée, la farine de noix partiellement déshuilée, la farine d'arachide partiellement déshuilée, la farine de noyaux d'abricot partiellement déshuilée, la farine de noisettes partiellement déshuilée, la farine de noix de macadamia partiellement déshuilée, la farine de graines de lin partiellement déshuilée, la farine de graines de lin doré partiellement déshuilée, la farine de graines de courge partiellement déshuilée, la farine de sésame partiellement déshuilée, la farine de graines de pavot partiellement déshuilée et la farine de graines de tournesol partiellement déshuilée.

6. Composition selon l'une quelconque des revendications 1 à 5,
(1) dans laquelle le composant a) contient au plus 50 % en poids, par rapport au poids total du composant a), de farine de coco, et/ou
(2) dans laquelle le composant a) contient au moins 25 % en poids, par rapport au composant a), de farine d'amande partiellement déshuilée.

7. Composition selon l'une quelconque des revendications 1 à 6, **caractérisée en ce que** le composant b) consiste en
(1) un ou plusieurs produits végétaux, choisis dans le groupe constitué par le psyllium, les enveloppes de psyllium, le psyllium indien et les enveloppe de psyllium indien, et/ou
(2) un ou plusieurs polysaccharides de mucilage isolés à partir de ces produits végétaux.

8. Composition selon l'une quelconque des revendications 1 à 7, **caractérisée en ce que** le composant b) contient des enveloppes de psyllium ou des produits obtenus à partir de celles-ci.

9. Composition selon l'une quelconque des revendications 1 à 8, **caractérisée en ce que**
(1) elle contient en plus des composants a), b) et c) un ou plusieurs constituants végétaux comestibles sous une forme entière ou broyée, différente d'une farine, les constituants végétaux comestibles étant choisis dans le groupe constitué par les fruits à gousse, les graines oléagineuses, les fruits à coque, les céréales sans gluten et les pseudo-céréales sans gluten,
et/ou
(2) **en ce qu'**elle contient en outre un ou plusieurs composants, choisis dans le groupe constitué par le sel, les agents levants, les substances aromatiques, les épices, les édulcorants, les matières grasses végétales et les matières grasses animales, et/ou en outre des additifs contenant des charges, choisis dans le groupe constitué par les fibres de pommes, les fibres d'avoine, les fibres de pois, les fibres de pommes de terre, les fibres d'amandes, les fibres de coco, les fibres de cellulose, les fibres de graines de cynorhodon, les fibres de pépins de mûre, les fibres de noyaux de grenade et l'inuline, et/ou en outre un isolat protéique végétal, choisi dans le groupe constitué par la protéine de riz, la protéine de pomme de terre, la protéine de pois, la protéine de graines de chia et la protéine de chanvre.

10. Composition selon l'une quelconque des revendications 1 à 9, **caractérisée en ce que** le composant c) consiste en de la poudre de blanc d'oeuf.

11. Composition selon la revendication 10, **caractérisée en ce qu'**elle contient, par rapport à la masse sèche de la composition, 20 à 70 % en poids d'une farine partiellement déshuilée de fruits à coque et/ou de graines oléagineuses autres que de légumineuses, 5 à 40 % en poids d'enveloppes de psyllium et 4 à 40 % en poids de poudre de blanc d'oeuf, ou **en ce qu'**elle contient, par rapport à la masse sèche de la composition, 30 à 70 % en poids d'une farine partiellement déshuilée de fruits à coque, 5 à 20 % en poids d'enveloppes de psyllium, 4 à 20 % en poids de poudre de blanc d'oeuf, 0 à 40 % en poids de graines oléagineuses, 0,1 à 6 % en poids de sel et 1 à 6 % en poids d'agents levants.

12. Composition selon l'une quelconque des revendications 1 à 9, **caractérisée en ce que** le composant c) consiste en des oeufs frais.

13. Composition selon l'une quelconque des revendications 1 à 12, sous la forme d'un prémélange de boulangerie.

14. Composition selon l'une quelconque des revendications 1 à 13, sous la forme d'une première composition, contenant les composants a) et b), et d'une deuxième composition, contenant le composant c).

15. Procédé de production de produits de boulangerie et de pâtes alimentaires, **caractérisé en ce que** la composition selon l'une quelconque des revendications 1 à 14 est transformée en une pâte par ajout d'un liquide consommable, et cuite par chauffage,
(1) un ou plusieurs des additifs suivants étant notamment utilisés conjointement avec la composition, qui sont choisis dans le groupe constitué par l'eau, une matière grasse végétale, une matière grasse animale, le vinaigre, les jus de fruits, les produits laitiers, le levain sans gluten, les vitamines, les minéraux, les enzymes, les additifs pour l'amélioration technologique de l'usinage pour la production industrielle de produits de boulangerie et de pâtes alimentaires, les fruits, les champignons, les légumes et les levures fraîches, et/ou
(2) le liquide consommable étant notamment l'eau, et la pâte étant cuite à 100 à 230 °C pendant 30 à 180 minutes.

16. Produits de boulangerie et de pâtes alimentaires, fabriqués à partir d'une composition selon l'une quelconque des revendications 1 à 14 et/ou pouvant être obtenus par un procédé selon la revendication 15.

17. Produits de boulangerie et de pâtes alimentaires selon la revendication 16, choisis dans le groupe constitué par le pain, les produits alimentaires semblables au pain, les produits de boulangerie, les biscuits, les gâteaux, les tartes, les pizzas, les gaufres, les crêpes, les muffins, les nouilles, les en-cas, les barres, les crackers et les wraps.

18. Utilisation d'une composition selon l'une quelconque des revendications 1 à 14 pour la production de produits de boulangerie et de pâtes alimentaires, notamment pour la production de pain.
